(19) Europäisches Patentamt
European Patent Office
Office européen des brevets

(11) **EP 3 799 280 A1**

(12) **DEMANDE DE BREVET EUROPEEN**

(43) Date de publication:
**31.03.2021 Bulletin 2021/13**

(51) Int Cl.:
*H02M 1/12* (2006.01)   *H02J 7/00* (2006.01)
*H02J 7/02* (2016.01)   *B60L 50/51* (2019.01)

(21) Numéro de dépôt: **20205933.3**

(22) Date de dépôt: **15.09.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.09.2013 FR 1358915**

(62) Numéro(s) de document de la (des) demande(s) initiale(s) en application de l'article 76 CBE:
**14306425.1 / 2 854 269**

(27) Demande déposée antérieurement:
**15.09.2014 EP 14306425**

(71) Demandeur: **Valeo Siemens eAutomotive France SAS**
**95800 Cergy (FR)**

(72) Inventeurs:
• **BOUCHEZ, Boris**
  **3057 SOLBERGELVA (NO)**
• **OSWALD, Dominique**
  **78800 HOUILLES (FR)**

(74) Mandataire: **Argyma**
**14 Boulevard de Strasbourg**
**31000 Toulouse (FR)**

Remarques:
Cette demande a été déposée le 05-11-2020 comme demande divisionnaire de la demande mentionnée sous le code INID 62.

(54) **PROCÉDÉ DE RÉDUCTION DU COURANT DE MODE COMMUN**

(57) L'invention concerne un procédé de réduction du courant de mode commun (i) circulant entre la masse interne (13) d'un circuit électrique (4), dans lequel on applique en un point d'injection (26) du circuit (4) à l'aide d'un composant électronique (21) une grandeur électrique (Vs, Is) au moins fonction dudit courant de mode commun,
et dans lequel ladite grandeur électrique (Vs, Is) est appliquée par le composant électronique (21) en fonction :

- du courant de mode commun (i) mesuré sur la ligne électrique (5) entre la source d'énergie électrique (2) et la ou les connexions de la ou des impédances (28),
- du courant de mode commun (i) mesuré sur la ligne électrique (5) entre la ou les connexions de la ou des impédances (28) et l'unité de stockage d'énergie électrique, et
- du courant (Is) circulant entre ledit point d'injection (26) et la terre.

Fig. 10

EP 3 799 280 A1

**Description**

La présente invention a pour objet la réduction du courant de mode commun circulant entre la masse interne d'un circuit électrique et la terre, lorsque de l'énergie électrique est échangée entre une source d'énergie électrique externe audit circuit et une unité de stockage d'énergie électrique dudit circuit. La source d'énergie électrique appartient par exemple à un réseau électrique étant notamment, mais non exclusivement, un réseau électrique dans lequel le neutre est relié directement à la terre.

Le réseau électrique peut être un réseau de tension alternative, polyphasée ou non, et cette tension est alors redressée pour alimenter l'unité de stockage d'énergie électrique du circuit électrique, par exemple une batterie.

Le problème que l'invention vise à résoudre va être explicité en se référant à l'exemple non limitatif suivant. Le circuit électrique est par exemple embarqué dans un véhicule et peut comprendre un moteur électrique pour la propulsion électrique du véhicule. Le véhicule comprend encore un châssis.

Lorsque l'unité de stockage d'énergie électrique est rechargée par le réseau électrique, le châssis est relié à la terre. Du fait de la présence de composants, parasites ou non, entre le circuit électrique et le châssis, un courant de mode commun peut circuler du circuit vers le châssis et se reboucler via la terre dans le réseau électrique.

Un tel courant de mode commun est dangereux pour un utilisateur qui reposerait par ses pieds sur la terre et qui s'appuierait sur le châssis du véhicule.

Aussi, des normes existent pour limiter la valeur du courant de mode commun admissible entre la partie du circuit électrique en aval d'un redresseur et le châssis. Les normes européennes limitent ainsi à 3,5 mA la valeur maximale du courant de mode commun à une fréquence de 50 Hz.

Pour respecter ces normes, il est connu de prévoir un transformateur d'isolement entre la partie du circuit en aval du redresseur et le châssis. Un tel transformateur peut être coûteux et son intégration dans un espace déjà contraint comme un véhicule peut être difficile.

Il est encore connu d'utiliser pour redresser le courant un composant à interrupteurs commandables, tel qu'un composant dit PFC (Power Factor Corrector), et d'implémenter des stratégies particulières pour la commande des interrupteurs. De telles stratégies peuvent conduire à un échauffement des interrupteurs et être très complexes.

Dans le domaine des hautes fréquences, on connaît par la publication « A simplified active input EMI filter of common-mode voltage cancellation for induction motor drive » un filtre actif permettant de réduire le courant de mode commun aux hautes fréquences en injectant une tension en série dans le réseau électrique.

On connaît également de la demande US 2004/0004514 un filtre actif cherchant à réduire le courant de mode commun aux hautes fréquences dans le domaine de la compatibilité électromagnétique (CEM).

En outre, un filtre actif utilise généralement une mesure du courant de mode commun afin d'adapter la stratégie de réduction de celui-ci. A cet effet, on prévoit un dispositif de mesure du courant de mode commun. Ce dispositif comprend par exemple un tore magnétique, comme divulgué dans la demande FR2980318 de la demanderesse. Cependant, la précision de la mesure du courant de mode commun reste un paramètre important dans l'efficacité de la réduction de ce courant de mode commun.

L'invention vise à remédier aux inconvénients des solutions ci-dessus pour réduire le courant de mode commun entre le circuit électrique et la terre.

L'invention y parvient, selon l'un de ses aspects, à l'aide d'un procédé de réduction du courant de mode commun circulant entre la masse interne d'un circuit électrique, notamment d'un circuit électrique d'un véhicule automobile, et la terre, lorsque de l'énergie électrique est échangée entre une unité de stockage d'énergie électrique du circuit électrique et une source d'énergie électrique externe audit circuit, procédé dans lequel :

- on applique en un point d'injection du circuit à l'aide d'un composant électronique une grandeur électrique au moins fonction dudit courant de mode commun, ladite grandeur électrique étant appliquée de manière à réduire le courant de mode commun ;
- on obtient la valeur du courant de mode commun à l'aide d'un dispositif de détection comprenant :

  - un tore magnétique configuré pour être traversé par une ligne électrique par l'intermédiaire de laquelle est échangée ladite énergie électrique, ladite ligne électrique formant un enroulement primaire ;
  - un enroulement secondaire, enroulé autour dudit tore, pour générer un flux magnétique à partir d'un courant de référence ;
  - un oscillateur pour générer le courant de référence à travers l'enroulement secondaire, le courant de référence étant configuré pour faire saturer ledit tore ;
  - le courant de mode commun correspondant à la valeur du courant de la ligne électrique obtenue à partir de la valeur moyenne du courant dans l'enroulement secondaire sur une période d'oscillation parcourant un cycle complet de magnétisation et de démagnétisation du tore.

En faisant parcourir un cycle complet de magnétisation et de démagnétisation au tore, on s'assure que le tore atteint une saturation magnétique sur la période d'oscillation. Ainsi, la valeur moyenne du courant dans l'enroulement secondaire varie de façon significative, ce qui permet d'améliorer la précision de mesure du courant circulant dans la ligne électrique, qui correspond au courant de mode commun. Ceci sera mieux compris dans la description du mode particulier illustré sur les figures.

La source d'énergie électrique peut faire partie d'un réseau électrique et la grandeur électrique appliquée peut permettre de réduire le courant de mode commun à la fréquence du réseau électrique. La grandeur électrique appliquée peut également permettre de réduire le courant de mode commun aux dix premières harmoniques de cette fréquence du réseau électrique.

On désignera ultérieurement par la suite par :

- « en amont du point d'injection », la partie de la ligne électrique disposée entre le réseau électrique et le point d'injection, et
- « en aval du point d'injection », la partie de la ligne électrique disposée entre le point d'injection et les composants du circuit électrique, notamment une unité de stockage d'énergie électrique.

La grandeur électrique appliquée au point d'injection par le composant électronique peut être :

- un potentiel électrique, auquel cas une tension est appliquée par le composant électronique entre ledit point d'injection et la terre, ou
- un courant électrique, auquel cas ce courant circule entre ledit point d'injection et la terre.

La grandeur électrique appliquée par le composant électronique lorsque le procédé ci-dessus correspond à une charge de l'unité de stockage d'énergie électrique du circuit depuis la source d'énergie électrique du réseau peut provoquer la génération d'un courant s'opposant au courant de mode commun circulant dans la ligne électrique en aval du point d'injection.

Lorsque le composant électronique applique un courant électrique au point d'injection, c'est ce courant qui est le courant généré mentionné ci-dessus.

Lorsque le composant électronique applique un potentiel électrique au point d'injection, l'application de ce potentiel provoque la génération du courant électrique mentionné ci-dessus.

Le courant ainsi généré du fait de l'application de ladite grandeur électrique par le composant électronique peut avoir une valeur inférieure ou égale à la valeur du courant de mode commun circulant dans la ligne électrique en aval du point d'injection. Ce courant généré vaut par exemple en valeur absolue au moins 50%, mieux 60%, mieux 70%, mieux 80%, mieux 90%, mieux 95%, du courant de mode commun circulant dans la ligne électrique en aval du point d'injection.

Plus la valeur du courant ainsi généré est proche de la valeur du courant de mode commun dans la ligne électrique en aval du point d'injection, plus la valeur du courant de mode commun circulant dans la ligne électrique en amont du point d'injection, c'est-à-dire entre autres dans le réseau électrique peut être réduite, par application de la loi des noeuds. Le courant généré du fait de l'application par le composant électronique de ladite grandeur électrique peut ainsi être une image aussi proche que possible du courant de mode commun circulant dans la ligne électrique en aval du point d'injection.

Selon un premier mode de réalisation, la mesure du courant de la ligne électrique comprend l'utilisation :

- d'un module intégrateur-comparateur configuré pour délivrer un courant, dit image du courant au primaire, qui est fonction du courant traversant la ligne électrique, et
- des moyens pour compenser le flux généré par le courant traversant la ligne électrique à partir du courant délivré par ledit module.

Selon une variante, la mesure du courant de la ligne électrique (5) comprend l'utilisation de moyens (193, 195, 196) pour sécuriser le fonctionnement de l'oscillateur (132).

Selon une variante, la compensation de flux comprend l'utilisation d'un troisième enroulement enroulé autour dudit tore, une sortie dudit module intégrateur-comparateur étant reliée audit troisième enroulement de façon à ce que ledit troisième enroulement soit parcouru par ledit courant image du courant au primaire.

Selon une variante, la compensation de flux comprend l'utilisation dudit enroulement secondaire, une sortie dudit module intégrateur-comparateur étant reliée audit enroulement secondaire de façon à ce que ledit enroulement secondaire soit parcouru par ledit courant image du courant au primaire.

Selon une variante, la mesure du courant de la ligne électrique comprend l'utilisation d'une résistance, dite de paramétrage, ayant une première borne reliée à l'enroulement secondaire et à l'oscillateur, et une seconde borne reliée à une borne de sortie du dispositif et au module intégrateur-comparateur de façon à ajuster les caractéristiques de sortie du dispositif de détection et les caractéristiques de l'oscillateur.

Selon une variante, la mesure du courant de la ligne électrique comprend l'utilisation d'une résistance, dite d'ajustement, ayant une première borne reliée à l'enroulement secondaire et à l'oscillateur et une seconde borne reliée à une masse dudit dispositif de façon à ajuster les caractéristiques de l'oscillateur.

Selon une variante, la mesure du courant de la ligne électrique comprend l'utilisation d'une résistance, dite de mesure, ayant une première borne reliée à l'enroulement secondaire, et une seconde borne reliée à une borne de sortie du dispositif et au module intégrateur-comparateur de façon à ajuster les caractéristiques de sortie du dispositif de détection.

Selon une variante, la mesure du courant de la ligne électrique comprend l'utilisation de moyens de filtrage dudit courant image du courant au primaire permettant d'obtenir un signal présentant un profil sensiblement identique à celui du courant traversant la ligne électrique.

Selon une variante, la mesure du courant de la ligne électrique comprend l'utilisation de moyens pour ajuster la plage de tension en sortie des moyens de filtrage.

Selon une variante, le procédé comprend l'utilisation d'un générateur de masse fictive, les moyens de mesure étant reliés à ladite masse fictive.

Selon un deuxième mode de réalisation, le composant électronique étant interposé entre la masse interne du circuit et la terre, ladite grandeur électrique est un potentiel électrique appliqué au point d'injection et dont résulte une tension appliquée entre ledit point d'injection et la terre. On applique la grandeur électrique entre la masse interne du circuit et la terre à l'aide dudit composant électronique de façon à former une tension, dite tension additionnelle ; cette tension additionnelle s'opposant à une tension appliquée par le réseau électrique entre la masse interne et la terre, de manière à réduire le courant de mode commun. La tension additionnelle appliquée dans le procédé, en particulier selon ce mode de réalisation, s'oppose à la tension appliquée par le réseau électrique entre la masse interne du circuit et la terre. La tension résultante entre le neutre du réseau électrique et la terre, mesurée aux bornes de l'impédance de la terre est ainsi réduite, d'où il ressort que le courant de mode commun est réduit. Le procédé suivant ce mode de réalisation peut comprendre des étapes de réduction du courant de mode commun telles que décrites dans la demande EP2571149 de la demanderesse, dont le contenu doit être considéré comme faisant partie la présente demande.

Selon un troisième mode de réalisation, la grandeur électrique est appliquée en un point d'injection relié via au moins une impédance, notamment un condensateur, à la ligne électrique dudit circuit par l'intermédiaire de laquelle est échangée ladite énergie électrique.

Le point d'injection peut être relié à la ligne électrique via au moins un condensateur. La capacité de chaque condensateur peut être de l'ordre d'un μF.

En variante, le point d'injection peut être relié à la ligne électrique via au moins une bobine, ou via au moins une résistance ou via un transformateur ou via une association des composants qui viennent d'être cités.

La ligne électrique peut être monophasée, auquel cas ledit point d'injection peut être relié :

- à la phase de la ligne électrique via au moins une impédance interposée entre ledit point et ladite phase, et
- au neutre de la ligne électrique via au moins une impédance interposée entre ledit point d'injection et ledit neutre.

Dans une variante du cas d'une ligne électrique monophasée, le point d'injection peut être relié seulement à la phase, respectivement au neutre, de la ligne électrique via une impédance sans être relié au neutre, respectivement à la phase, de ladite ligne électrique.

En variante, la ligne électrique peut être triphasée, auquel cas le point d'injection peut être relié à chaque phase de la ligne électrique via au moins une impédance respective.

Dans une variante du cas d'une ligne électrique triphasée, le point d'injection n'est pas relié à certaines phases de la ligne.

Plus globalement, la ligne électrique peut être polyphasée, le nombre de phases pouvant être différent de trois.

Selon une variante, la valeur du courant de la ligne électrique est mesurée à l'aide du dispositif de mesure positionné sur la ligne électrique entre la source d'énergie électrique du réseau et la ou les connexions de la ou des impédances avec la ligne électrique.

Selon un premier exemple de mise en oeuvre du troisième mode de réalisation, ladite grandeur électrique est appliquée par le composant électronique en fonction uniquement du courant de mode commun mesuré sur la ligne électrique, en particulier entre la source d'énergie électrique du réseau et la ou les connexions de la ou des impédances avec la ligne électrique.

Le composant électronique peut, lorsque ladite grandeur est générée uniquement en fonction du signal représentatif du courant de mode commun mesuré en un seul emplacement de la ligne électrique, être assimilé à une boucle à un seul gain.

Selon un deuxième exemple de mise en oeuvre du troisième mode de réalisation, ladite grandeur électrique est appliquée par le composant électronique en fonction du courant de mode commun mesuré sur la ligne électrique, notamment mesuré en amont du point d'injection, et du courant circulant entre ledit point d'injection et la terre.

Lorsque le signal représentatif du courant de mode commun est mesuré en un seul emplacement selon ce deuxième exemple, le composant électronique peut être assimilé à une boucle à deux gains.

Le procédé peut alors comprendre l'utilisation d'un composant électronique comportant :

- un premier sous-composant recevant en entrée le courant de mode commun mesuré sur la ligne électrique, et
- un deuxième sous-composant recevant en entrée le courant circulant entre ledit point d'injection et la terre, les sorties de chaque sous-composant étant additionnées pour générer la grandeur appliquée par le composant électronique.

Le premier sous-composant peut être identique au composant électronique selon le premier exemple de mise en oeuvre du troisième mode de réalisation. En variante, le premier sous-composant peut fournir un gain de valeur plus importante que celle du gain fourni par le composant électronique selon le premier exemple de mise en œuvre.

Le deuxième sous-composant peut fournir un deuxième gain permettant d'améliorer la stabilité aux hautes et basses fréquences en supprimant les oscillations induites par le premier sous-composant pour ces hautes et basses fréquences. Ce deuxième sous-composant peut ainsi asservir le courant généré du fait de l'application de ladite grandeur électrique à une valeur égale au produit du gain fourni par le premier sous-composant et du courant de mode commun mesuré.

Selon une variante de ce deuxième exemple de mise en œuvre de ce troisième mode de réalisation, ladite grandeur électrique est appliquée par le composant électronique en fonction :

- du courant de mode commun mesuré sur la ligne électrique entre la source d'énergie électrique et la ou les connexions de la ou des impédances,
- du courant de mode commun mesuré sur la ligne électrique entre la ou les connexions de la ou des impédances et l'unité de stockage d'énergie électrique, c'est-à-dire en aval du point d'injection et
- du courant circulant entre ledit point d'injection et la terre.

Le courant de mode commun peut donc être mesuré en deux emplacements différents de la ligne électrique à l'aide par exemple d'un deuxième dispositif de mesure similaire à celui présenté précédemment.

La mesure du courant de mode commun en aval du point d'injection peut permettre de réaliser une rétro-action).

L'invention concerne en outre un circuit électronique, comportant :

- une ligne électrique apte à être connectée à un réseau électrique de manière à permettre un échange d'énergie électrique entre une source d'énergie électrique dudit réseau et ledit circuit, et
- un composant électronique destiné à être relié d'une part à la ligne électrique, et apte à être relié d'autre part à la terre, le composant étant configuré pour appliquer en un point du circuit une grandeur électrique permettant de réduire le courant de mode commun lorsque de l'énergie électrique est échangée entre le circuit électrique et la source d'énergie électrique ; et
- un dispositif de mesure comprenant :

  - un tore magnétique configuré pour être traversé par la ligne électrique par l'intermédiaire de laquelle est échangée ladite énergie électrique, ladite ligne électrique formant un enroulement primaire ;
  - un enroulement secondaire, enroulé autour dudit tore, pour générer un flux magnétique à partir d'un courant de référence ;
  - un oscillateur pour générer le courant de référence à travers l'enroulement secondaire, le courant de référence étant configuré pour faire saturer ledit tore ;
    le courant de mode commun correspondant à la valeur du courant de la ligne électrique obtenue à partir de la valeur moyenne du courant au secondaire sur une période d'oscillation parcourant un cycle complet de magnétisation et de démagnétisation du tore.

Le procédé selon l'invention peut présenter l'une quelconque de des caractéristiques suivantes compatibles avec les premier, deuxième et troisième modes de réalisation :

- le composant électronique est configuré de manière à asservir la valeur du courant de mode commun qu'il reçoit en entrée à une valeur de consigne prédéfinie, notamment zéro ;
- ladite grandeur électrique est un potentiel électrique appliqué au point d'injection et dont résulte une tension appliquée entre ledit point d'injection et la terre.

L'invention concerne également des procédés obtenus par combinaison des modes de réalisationentre eux lorsqu'ils sont compatibles.

L'invention pourra être mieux comprise à la lecture qui va suivre d'un exemple non limitatif de mise en oeuvre de celle-ci et à l'examen du dessin annexé sur lequel :

- la figure 1 représente de façon schématique un ensemble au sein duquel peut être mise en œuvre l'invention,
- la figure 2 représente de façon schématique un modèle en mode commun, équivalent à l'ensemble de la figure 1,
- la figure 3 est une représentation similaire à celle de la figure 1 dans laquelle un composant électronique selon un premier exemple de mise en oeuvre de l'invention est introduit,
- les figures 4 et 5 représentent de façon analogue à la figure 3 deux variantes d'un composant électronique selon un deuxième exemple de mise en œuvre de l'invention,
- la figure 6 représente le schéma électrique du composant électronique de la figure 4,
- la figure 7 est le diagramme de Bode de la fonction de transfert du composant électronique de la figure 4,
- la figure 8 représente de façon analogue aux figures 3 à 5 un composant électronique selon un troisième exemple de mise en œuvre de l'invention, et
- les figures 9 à 11 diffèrent respectivement des figures 3, 5 et 8 par le fait que le composant électronique forme une source de courant et non une source de tension.
- la figure 12 illustre de façon schématique un premier exemple de réalisation du dispositif de mesure servant à mesurer le courant de mode commun,
- la figure 13 illustre une courbe donnant, en fonction du temps, la variation d'un courant circulant dans ledit dispositif, en absence d'un courant de mode commun,
- la figure 14 est une courbe d'aimantation illustrant le fonctionnement dudit dispositif de mesure, en présence et en absence d'un courant de mode commun,
- la figure 15 reprend la figure 11 pour comparer les courbes obtenues en présence et en absence d'un courant de mode commun,
- la figure 16 illustre de façon schématique un second exemple de réalisation du dispositif de mesure,
- la figure 17 illustre de façon schématique un troisième exemple de réalisation du dispositif de mesure,
- la figure 18 illustre de façon schématique un autre exemple de réalisation du dispositif de mesure.
- la figure 19 illustre de façon schématique un quatrième exemple de réalisation du dispositif de mesure,

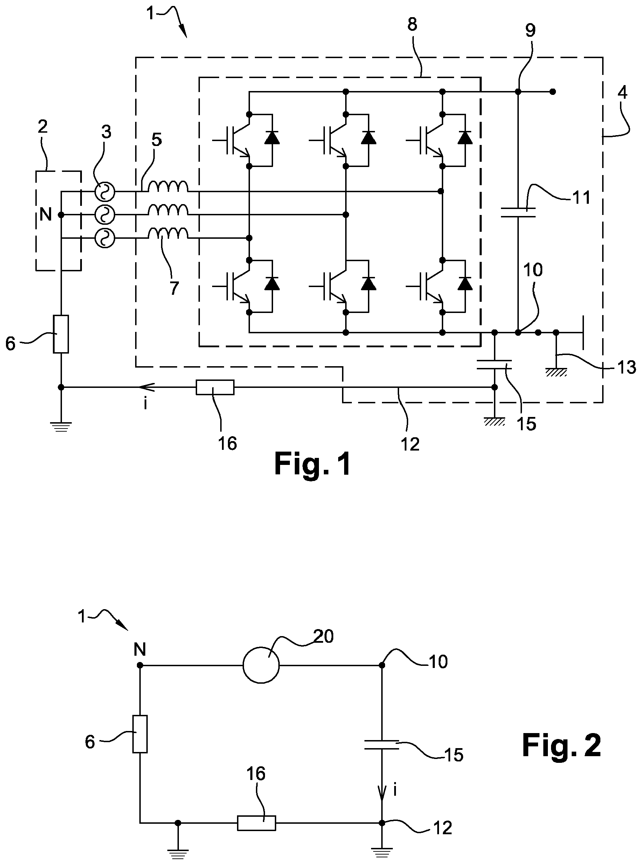

On a représenté à la figure 1 un ensemble 1 au sein duquel l'invention peut être mise en œuvre.

Cet ensemble 1 comprend une source d'énergie électrique 2 d'un réseau électrique apte à être branché via un connecteur 3 à un circuit électrique 4. Le circuit électrique 4 est dans l'exemple considéré embarqué sur un véhicule à propulsion hybride ou électrique, faisant alors partie du circuit électrique de propulsion de ce véhicule.

Lorsque l'on souhaite charger une unité de stockage d'énergie électrique non représentée du circuit électrique 4, la source d'énergie électrique 2 fournit par exemple une tension alternative au circuit électrique 4. Dans l'exemple considéré, le réseau est triphasé et la tension aux bornes de la source d'énergie électrique 2 a une valeur efficace égale à 230 V. La fréquence de la tension est de 50 Hz dans l'exemple considéré. Le neutre N du réseau électrique est relié à la terre, et une impédance parasite 6 est interposée entre le neutre N et la terre.

Le circuit électrique 4 comprend :

- une ligne électrique 5 reliant le connecteur 3 au reste du circuit électrique 4,
- des inductances 7, et
- un étage 8 de redressement de la tension alternative fournie par la source d'énergie électrique 2 et dont les bornes de sortie 9 et 10 sont parcourues par un courant continu.

L'étage de redressement 8 comprend par exemple des interrupteurs commandables tels que des transistors. L'étage 8 est par exemple un composant PFC, connu de l'homme du métier pour redresser une tension alternative, adapter la valeur de la tension redressée à la charge du circuit 4, et respecter les normes en vigueur quant à la valeur du facteur de puissance et à l'émission de courants harmoniques.

Entre les bornes 9 et 10 de sortie de l'étage 8 est monté un condensateur 11. L'unité de stockage d'énergie électrique, qui est par exemple une batterie, peut être branchée en parallèle de ce condensateur 11. Cette batterie absorbe une puissance électrique par exemple supérieure à 100W, par exemple de l'ordre de 3kW quand le réseau électrique est monophasé, par exemple une puissance de l'ordre de 20 kW quand le réseau électrique est triphasé.

L'ensemble 1 comprend encore un châssis métallique 12. En cas de défaut de la mise à la terre du châssis, ce dernier est potentiellement relié à la terre via une impédance 16. Cette impédance 16 correspond, dans le cas où le châssis fait partie d'un véhicule, à la résistance corporelle d'un utilisateur du véhicule lorsque ce dernier touche d'une part la carrosserie et d'autre part le sol.

Dans l'application où l'ensemble 1 est embarqué sur un véhicule à propulsion électrique ou hybride, les inductances 7 correspondent par exemple alors aux enroulements des phases du stator d'un moteur électrique pour la propulsion d'un moteur électrique. Les enroulements 7 peuvent alors être reliés au réseau électrique selon l'enseignement de la demande WO 2010/057892.

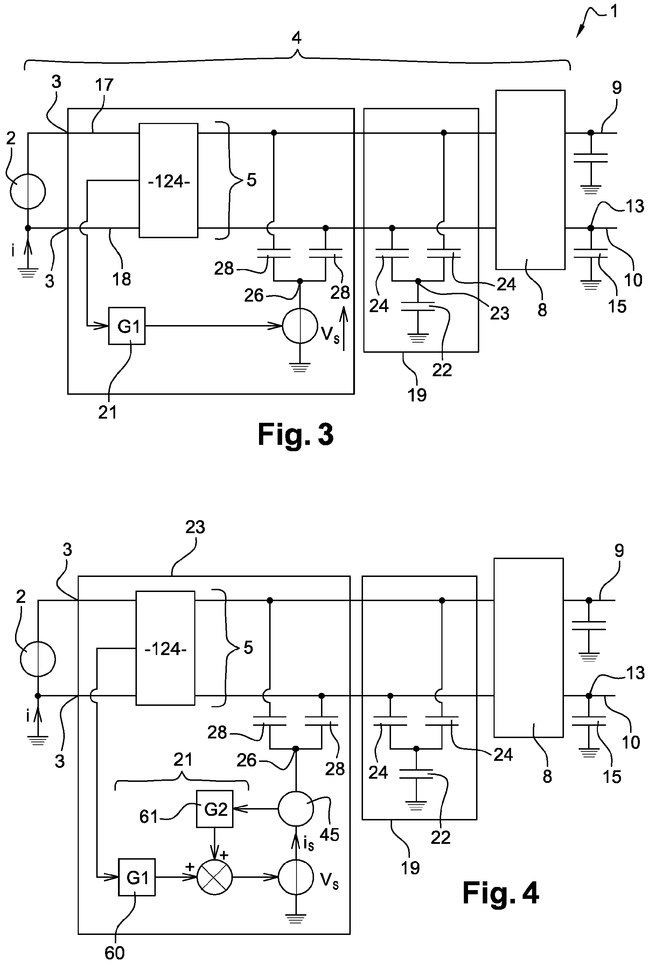

Une capacité 15 modélise les impédances parasites et/ou les impédances réelles ajoutées pour raisons techniques, sous forme de composants électroniques de type condensateurs, notamment entre la borne 10 du circuit 4 et le châssis 12. Une autre capacité peut exister entre la borne 9 du circuit 4 et le châssis 12, comme on peut le voir sur la figure 3.

La borne 10 du circuit 4 est ici la borne négative de sortie de l'étage redresseur 8 et le circuit électrique 4 possède une masse interne 13 qui est ici formée par la borne 10. Du fait de l'existence de ce condensateur 15, du courant de mode commun i peut circuler du circuit 4 vers le châssis 12 et en circulant dans la terre, se reboucler dans le réseau électrique.

Dans le cas où la source d'énergie électrique 2 du réseau électrique fournit une tension alternative polyphasée, et lors d'une séquence de fonctionnement des interrupteurs de l'étage 8 redresseur, la borne 10 est alternativement reliée au neutre du réseau électrique et à l'une des phases de ce réseau électrique. Dans le cas d'un réseau électrique monophasé, la borne 10 est reliée sélectivement au neutre ou à la phase du réseau électrique.

Une tension E est ainsi appliquée entre la borne 10 et le châssis 12 relié à la terre et, du fait de cette tension et du condensateur 15, du courant circule de la borne 10 vers la terre.

La partie du circuit 4 en amont de la borne 10, et le réseau électrique, peuvent ainsi être assimilés à une source de tension virtuelle 20 appliquant alternativement entre la borne 10 et le châssis 12:

- une tension E nulle, et
- une tension E image de celle délivrée par le réseau au circuit 4.

En conséquence, du courant de mode commun i circule à travers le condensateur 15 et les impédances 16 et 6 avant de se reboucler dans le réseau. On obtient ainsi le modèle en mode commun équivalent selon la figure 2.

On va décrire en référence à la figure 3 un exemple de mise en œuvre de l'invention. Sur cette figure, la ligne électrique 5 est monophasée, comprenant un conducteur 17 formant la phase et un autre conducteur 18 formant le neutre N, mais l'invention n'est pas limitée à une ligne monophasée.

Comparativement à l'ensemble représenté sur la figure 1, l'ensemble 1 de la figure 3 comprend un filtre d'interférences électromagnétiques 19 intégré au circuit 4 et comprenant un condensateur 22, étant ici une capacité Y, monté entre la terre et un point 23 relié à chaque conducteur 17 ou 18 de la ligne électrique 5 via un condensateur 24, étant ici une capacité X.

Comme on peut le voir sur la figure 3, un composant 21 électronique est intégré au circuit 4. Ce composant électronique 21 est ici configuré pour appliquer un potentiel électrique en un point 26, de sorte qu'une tension Vs est appliquée entre ce point 26 et la terre. L'invention n'est cependant pas limitée à un composant électronique appliquant un potentiel électrique, comme on le verra par la suite.

Ce composant 21 est un filtre actif configuré pour appliquer à une fréquence égale à celle de la tension fournie par le réseau électrique un potentiel électrique dont découle la tension Vs, cette tension Vs étant appliquée entre le point 26 et la terre et s'opposant à la tension appliquée par la source de tension virtuelle 20. La tension résultante appliquée aux impédances 6 et 16 est ainsi réduite, notamment annulée, de sorte que le courant parcourant ces impédances 6 et 16 est réduit, notamment annulé.

Le point 26 est relié à chaque conducteur 17 ou 18 de la ligne électrique 5 via un condensateur respectif 28 dans l'exemple décrit. Chaque condensateur 28 a notamment une capacité de l'ordre d'un $\mu F$. Le potentiel appliqué par le composant électronique 21 et dont résulte la tension Vs est dans l'exemple considéré généré uniquement sur la base d'un signal représentatif du courant de mode commun i mesuré sur la ligne électrique 5 en amont du point 26.

Dans l'exemple considéré, le composant 21 est associé à un dispositif de mesure 124 du courant de mode commun i parcourant la ligne électrique 5. Dans le cas d'une ligne électrique 5 monophasée, ce dispositif de mesure peut mesurer un signal représentatif du courant dans le conducteur 17 formant la phase et un signal représentatif du courant dans le conducteur 18 formant le neutre, par exemple à l'aide d'un tore magnétique, nanocristallin ou non. Par calcul à partir de ces signaux représentatifs de courant, on peut déterminer la valeur d'un signal représentatif du courant de mode commun i. Sur la base de cette information, le composant électronique 21 génère le potentiel dont résulte la tension Vs qui est appliquée entre le point 26 et la terre.

Comme représenté sur la figure 3, le composant électronique 21 se comporte globalement comme un gain G1 et, en désignant par :

- Zinj l'impédance existant entre le point 26 et la terre du fait de la présence de la tension Vs,
- Zy l'impédance existant entre chaque conducteur 17, 18 et la terre du fait de la présence du condensateur 22 et de la ou les capacités parasites 15,

- Vac la tension aux bornes de la source d'énergie électrique 2.

la valeur du courant de mode commun i circulant dans la ligne électrique 5 en présence du composant électronique est donnée par l'expression :

$$i = \frac{(Zinj + Zy).Vac/2}{Zy.(Zinj + G_1)}$$

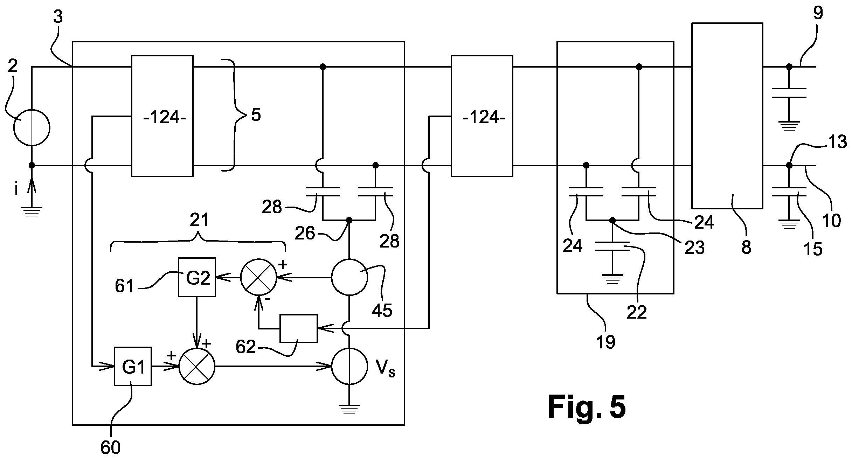

On va maintenant décrire en référence aux figures 4 et 5 un composant électronique 21 selon un deuxième exemple de mise en œuvre de l'invention.

Contrairement au composant électronique de la figure 3, qui peut être assimilé à une boucle à un seul gain générant un potentiel dont résulte la tension Vs sur la base seulement de la valeur d'un signal représentatif du courant de mode commun i, le composant électronique selon ce deuxième exemple de mise en œuvre de l'invention génère la tension Vs à la fois sur la base d'un signal représentatif du courant de mode commun i parcourant la ligne électrique 5 mais également sur la base d'un signal représentatif du courant Is circulant entre le point 26 et la terre, ce courant Is pouvant être appelé « courant de sortie du composant électronique 21 ». Un deuxième dispositif de mesure 45 disposé entre le point 26 et la terre peut permettre d'obtenir un signal représentatif dudit courant de sortie.

De façon schématique, on peut considérer que le composant électronique 21 forme ici une boucle à deux gains :

- un premier sous-composant 60 se comportant comme un gain G1 amplifiant le signal représentatif du courant de mode commun i dans la ligne électrique 5 mesuré par le dispositif 24, et
- un deuxième sous-composant 61 se comportant comme un gain G2 amplifiant le signal représentatif du courant de sortie Is circulant entre le point 26 et la terre.

Avec les mêmes notations que précédemment, l'équation donnant la valeur du courant de mode commun i lorsque le composant électronique 21 selon la figure 4 est utilisé est :

$$i = \frac{(Zinj + Zy + G_2).Vac/2}{Zy.(Zinj + G_2 + G_1)}$$

Le deuxième sous-composant 61 formant le gain G2 a pour but de stabiliser le fonctionnement du composant électronique 21 aux hautes et basses fréquences en supprimant les oscillations se produisant à ces fréquences.

Le composant électronique représenté sur la figure 4 reçoit sur une de ses entrées un signal représentatif du courant de mode commun i mesuré en un seul emplacement sur la ligne électrique 5. Cette mesure est ici effectuée par le dispositif 24 en amont du point 26, c'est-à-dire entre le connecteur 3 et les condensateurs 28.

Comme représenté sur la figure 5, selon une variante du deuxième exemple de mise en œuvre de l'invention, le composant électronique 21 peut générer le potentiel dont résulte la tension de sortie Vs sur la base de deux mesures distinctes représentatives du courant de mode commun i, ces mesures étant effectuées en deux emplacements différents sur la ligne électrique 5. Ainsi, un premier dispositif de mesure 124, disposé similairement au dispositif de mesure des figures 3 et 4 en amont du point 26 sur la ligne électrique 5, fournit un signal formant l'entrée du premier sous-composant 60 tandis qu'un deuxième dispositif de mesure 124, similaire ou non au tore magnétique nanocristallin pouvant être utilisé pour le premier dispositif de mesure 124, peut être disposé en aval du point 26.

Le deuxième dispositif de mesure 124 est par exemple disposé sur la ligne électrique 5 entre les condensateurs 28 et l'étage de redressement 8. Ce deuxième dispositif de mesure 124 fournit en entrée d'un troisième sous-composant 62, formant globalement un gain G3, un signal représentatif du courant de mode commun en aval des condensateurs 28. La sortie du troisième sous-composant 62 peut être comparée au signal fourni par le dispositif de mesure 45 et le résultat de cette comparaison peut former la véritable entrée du deuxième sous-composant 61.

Le gain G3 du troisième sous-composant 62 peut être unitaire et ajouter au composant 21 un contrôle par rétro-action.

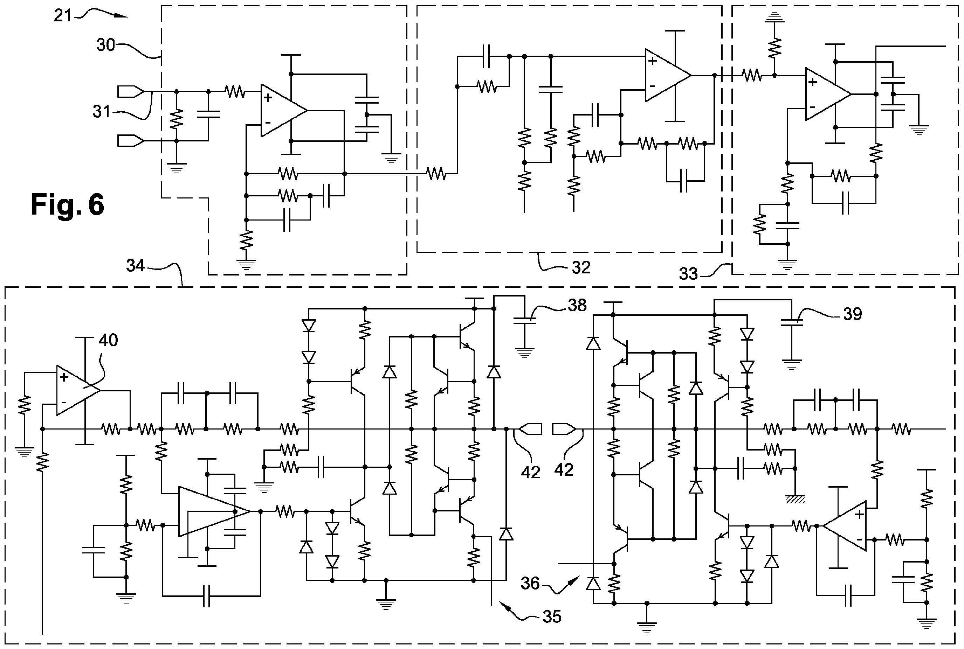

On va maintenant décrire en référence à la figure 6 un exemple non limitatif de schéma électrique du composant électronique 21 de la figure 4.

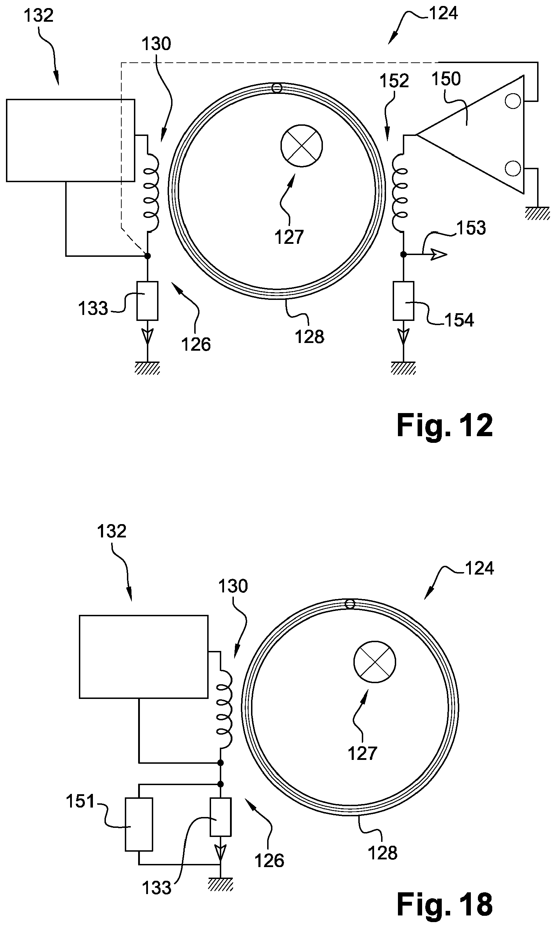

Le composant électronique 21 comprend un étage d'entrée 30 recevant en entrée la tension mesurée par un conducteur 31 bobiné autour du noyau magnétique du dispositif de mesure 124. Cette tension d'entrée est représentative de la valeur du courant de mode commun i dans la ligne électrique 5. Un exemple de dispositif de mesure 124 sera décrit ultérieurement en relation avec les figures 12 à 19.

L'étage 30 a pour rôle d'amplifier la mesure de tension ainsi effectuée tout en filtrant les hautes fréquences.

La sortie de cet étage 30 attaque ensuite un étage 32 de sommation du signal issu de l'étage 30 et d'un signal représentatif du courant de sortie du composant électronique 21. Cet étage 32 permet de réaliser un asservissement du courant de sortie Is au produit du gain G1 du premier sous-composant 60 et du courant de mode commun mesuré par le dispositif de mesure 124.

La sortie de l'étage 32 attaque ensuite un étage 33 formant un amplificateur passe bande. Cet étage 33 a pour fonction d'augmenter le gain global de la boucle formée dans cet exemple par le composant électronique 21, et de couper les basses et les hautes fréquences.

La sortie de l'étage 33 attaque un étage de sortie haute tension 34 qui comprend dans l'exemple décrit deux amplificateurs 35 et 36.

Chacun de ces amplificateurs 35 ou 36 génère une tension à partir d'un signal issu à la base de la mesure effectuée par le dispositif 24. Les deux amplificateurs 35 et 36 peuvent être identiques ou non, et générer ou non une même tension. La première et la deuxième tension ont par exemple toutes deux une amplitude de 300 V environ.

Le premier amplificateur 35 comprend comme on peut le voir un montage inverseur 40.

Avec les deux amplificateurs 35 et 36 représentés sur la figure 6, une première tension est appliquée entre le point 26 et la masse interne 42 du composant électronique 21 par le deuxième amplificateur 36 tandis qu'une deuxième tension de signe opposé est appliquée entre la terre et la masse interne 42 du composant électronique 21 par le premier amplificateur 35. La différence entre ces deux tensions correspond à la tension appliquée par le composant électronique 21 entre le point 26 et la terre pour réduire, mieux annuler, le courant de mode commun i.

Dans un autre exemple non représenté, un seul amplificateur peut être utilisé pour former l'étage 34 générant la tension Vs.

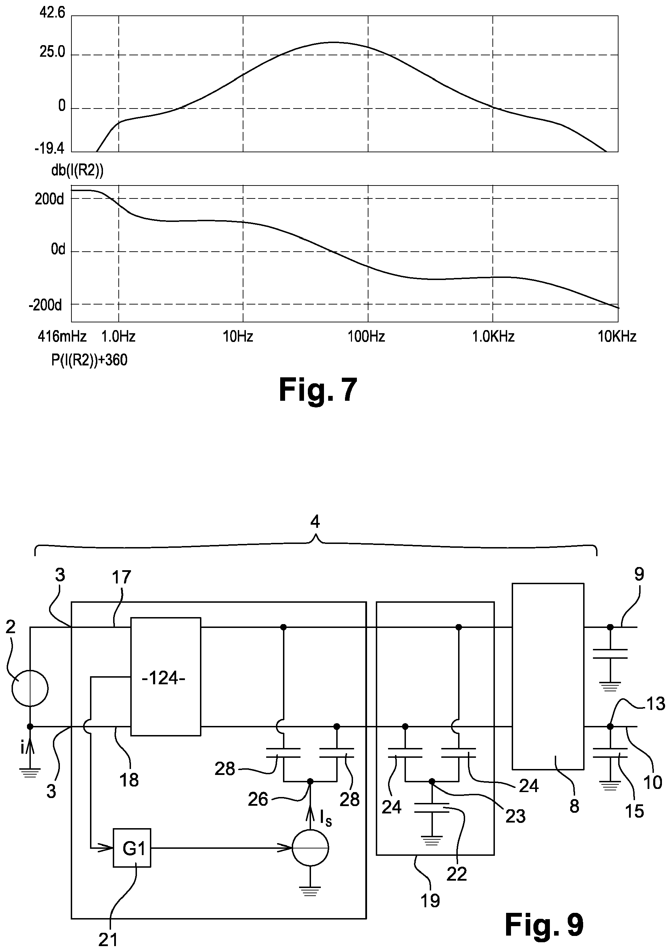

La figure 7 représente le diagramme de Bode du composant électronique 21 qui vient d'être décrit en référence à la figure 6.

On constate que le gain en dB est positif pour des fréquences comprises entre environ 5 Hz et 1 kHz. On constate par ailleurs que le composant électronique présente un gain de 31 dB entre 50 Hz et 60 Hz, soit sensiblement à la fréquence du réseau électrique, et une marge de phase faible lorsque le gain en dB s'annule. Autour de 5 Hz, la marge de phase est dans cet exemple de 115° tandis qu'autour de 1 kHz, la marge de phase est de -105°.

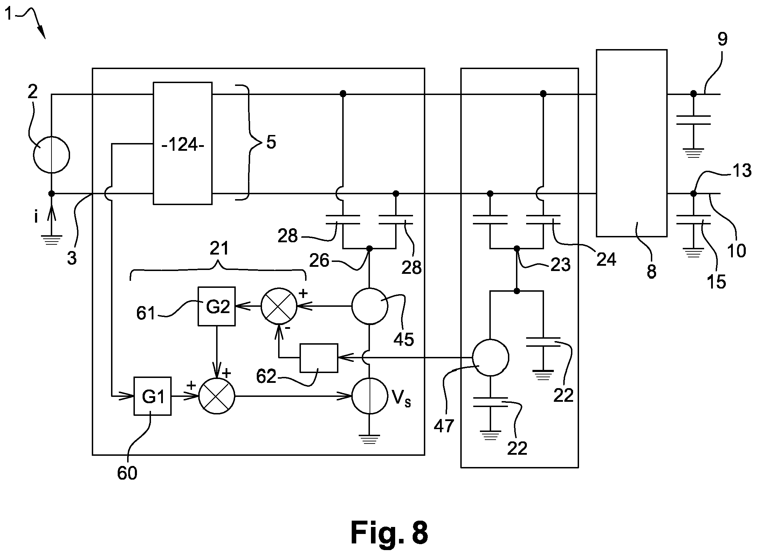

On va maintenant décrire en référence à la figure 8 un composant électronique 21 selon un troisième exemple de mise en œuvre de l'invention. Similairement à la variante du deuxième exemple de mise en œuvre de l'invention qui vient d'être décrite en référence à la figure 5, selon ce troisième exemple de mise en œuvre, la tension Vs résulte d'un potentiel appliqué par le composant électronique 21 qui est généré sur la base de trois entrées.

Dans cet exemple, la première entrée est le signal représentatif du courant de mode commun i mesuré en amont des condensateurs 28 sur la ligne électrique, et la deuxième entrée est la valeur du courant de sortie Is circulant entre le point 26 et la terre, comme selon l'exemple de la figure 5.

Contrairement à l'exemple de la figure 5, la troisième entrée est ici formée par la valeur d'un signal représentatif du courant circulant dans l'un des condensateurs 22 du filtre d'interférences électromagnétiques 19.

Cette troisième entrée est acquise à l'aide d'un dispositif de mesure 47 monté en série avec ledit condensateur 22 et elle est traitée par le troisième sous-composant 62 qui permet un contrôle par rétro-action.

La sortie de ce troisième sous-composant 62 est ensuite comparée au signal représentatif du courant de sortie Is mesuré par le dispositif 45, puis le résultat de ladite comparaison est reçu en entrée du deuxième sous-composant 61.

Avec les mêmes notations que ci-dessus et en désignant par :

- Cyf2 la capacité du condensateur 22 de la figure 8 en série avec le dispositif de mesure 47,
- Cyf1 la capacité du condensateur 22 de la figure 8 en parallèle avec le dispositif de mesure 47, et
- Cor la fonction de transfert du troisième sous-composant 62,

l'équation donnant la valeur du courant de mode commun en fonction de la tension Vac fournie par la source d'énergie électrique 2 en présence du composant électronique 21 de la figure 8 est la suivante :

$$i = \frac{(Zinj + Zy + G_2.(1 - Cor.\frac{C_{yf1}}{C_{yf1} + C_{yf2} + C_{ybat}})).Vac/2}{Zy.(Zinj + G_2 + G_1)}$$

Si on choisit le troisième sous-composant 62 de sorte que sa fonction de transfert prenne la valeur suivante :

$$Cor = \frac{C_{yf1} + C_{yf2} + C_{ybat}}{C_{yf1}}$$

Alors l'équation donnant la valeur du courant de mode commun i en fonction de la tension fournie par la source d'énergie électrique 2 en présence du composant électronique de la figure 8 devient :

$$i = \frac{(Zinj + Zy).Vac/2}{Zy.(Zinj + G_2 + G_1)}$$

Le composant électronique 21 selon la figure 8 met ainsi en œuvre :

- un contrôle en boucle ouverte avec rétro-action via le troisième sous-composant 62 et le gain G2 fourni par le deuxième sous-composant 61 pour supprimer le courant de mode commun i, et
- un contrôle via le premier sous-composant 60 fournissant le gain G1 permettant de supprimer l'erreur résiduelle liée aux imprécisions par exemple sur les valeurs de Zy, Zybat, l'impédance de terre correspondant à la somme des impédances 6 et 16 de la figure 1, ou encore sur la valeur de la fonction de transfert du troisième sous-composant 62.

Les figures 3 à 8 portent sur un composant électronique 21 injectant au point 26 une grandeur électrique qui est un potentiel électrique, c'est-à-dire que le composant électronique 21 se comporte comme une source de tension.

En variante, comme représenté sur les figures 9 à 11, le composant électronique 21 peut être configuré pour injecter un courant électrique au point 26, ce composant 21 se comportant comme une source de courant.

La figure 9 représente ainsi une variante du premier exemple de mise en œuvre de l'invention de la figure 3 n'en différant que par le fait que le composant électronique 21 injecte un courant et non un potentiel électrique.

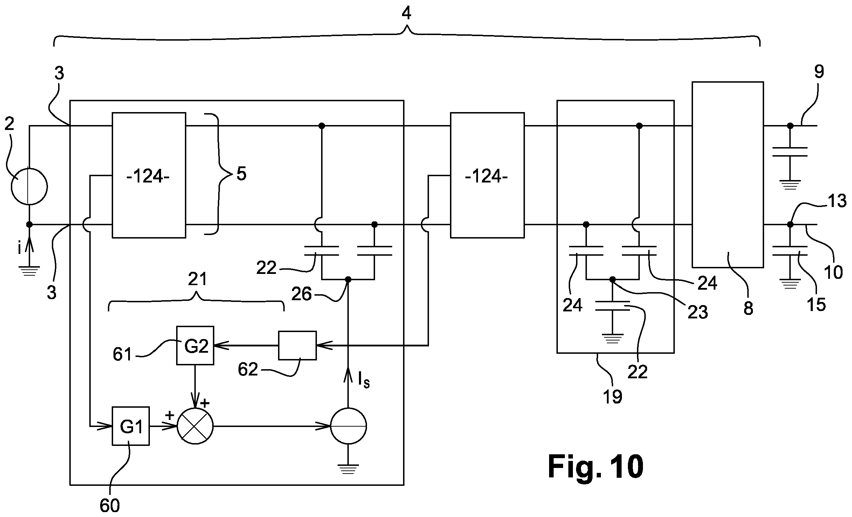

La figure 10 représente ainsi une variante du deuxième exemple de mise en œuvre de l'invention de la figure 5 n'en différant que :

- par le fait que le composant électronique 21 injecte un courant et non un potentiel électrique, et
- par le fait que le deuxième sous-composant 61 a pour seule entrée la sortie du troisième sous-composant 62, c'est-à-dire que le composant électronique qui génère le courant Is n'a par pour entrée le courant Is mais le courant de mode commun en amont et en aval du point d'injection 26.

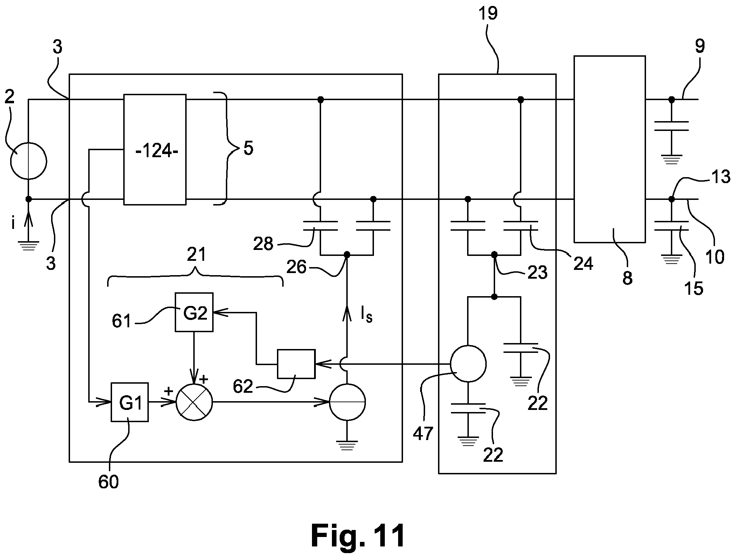

La figure 11 représente ainsi une variante du troisième exemple de mise en œuvre de l'invention de la figure 8 n'en différant que :

- par le fait que le composant électronique 21 injecte un courant et non un potentiel électrique, et
- par le fait que le deuxième sous-composant 61 a pour seule entrée la sortie du troisième sous-composant 62, c'est-à-dire que la génération par le composant électronique 21 du courant Is ne se fait pas avec ce même courant Is comme entrée mais avec comme entrées le courant de mode commun en amont du point d'injection 26 et le courant circulant dans le condensateur 22 du filtre 19.

Le troisième sous-composant 62 des exemples des figures 10 et 11 permet de mettre en œuvre une rétro-action.

Un exemple de dispositif 124 de mesure du courant de mode commun va maintenant être décrit plus précisément dans ce qui suit, en faisant d'abord référence à la figure 12.

En mode normal, la ligne électrique 5 peut être destinée à être parcourue par un courant alternatif. En cas d'anomalie, elle pourra aussi être traversée par d'un courant de mode commun. Le courant de mode commun peut correspondre à la somme résultante, autrement dit la somme algébrique, de courants circulant dans plusieurs éléments conducteurs de la ligne électrique 5. En particulier, dans une installation monophasée, le courant est la résultante des courants circulant dans la phase 17 et le neutre 18 de la ligne électrique 5. Ainsi, dans ce qui suit, par l'expression « courant parcourant la ligne électrique 5 » on désigne le courant résultant parcourant les éléments conducteurs de la ligne électrique 5.

Lesdits moyens 126 de génération du flux magnétique comprennent, notamment, un tore magnétique 128, configuré pour être parcouru par un flux magnétique provenant du courant circulant dans ladite ligne électrique 5.

Ledit tore magnétique 128 est constitué, par exemple, d'un matériau magnétique présentant une perméabilité relative maximale $\mu r$ comprise entre 5000 et 150000, notamment de l'ordre de 15000 et/ou un champ coercitif Hc compris entre 1 et 3 A/m. Il pourra en particulier s'agir de ferrite ou de matériaux amorphes.

Le tore 128 est configuré pour être traversé par ladite ligne électrique qui forme un enroulement primaire 127. De préférence, ledit enroulement primaire 127 comprend une spire. On entend par là que le tore magnétique 128 est configuré pour que ledit enroulement primaire passe de façon rectiligne à travers ledit tore 128.

Lesdits moyens 126 de génération du flux magnétique comprennent un enroulement secondaire 130, enroulé autour dudit tore 128, pour générer un flux magnétique parcourant ledit tore à partir d'un courant de référence.

Lesdits dispositif de mesure 124 comprennent en outre, par exemple, un oscillateur 132 générant ledit courant de référence à travers l'enroulement secondaire. Ledit oscillateur est ici relié d'une part à une première borne de l'enroulement secondaire 128 et de l'autre à une seconde borne dudit enroulement secondaire 128, seconde borne à laquelle est reliée une résistance 133 desdits dispositif de mesure 124. Ladite résistance 133 est située entre ladite seconde borne et la masse. L'oscillateur 132 génère, par exemple, une tension de type carré prenant alternativement les deux valeurs +Vmax et -Vmax. L'oscillateur est ici configuré pour passer de +Vmax à -Vmax et réciproquement dès qu'un maximum ou un minimum de courant Ip+ ou Ip- dans l'enroulement secondaire 130 est atteint. La résistance 133 permet d'ajuster les oscillations délivrées au second enroulement 130, notamment les valeurs de courant crête Ip+ ou Ip- du second enroulement 130.

Lesdits dispositif de mesure 124, en particulier ledit oscillateur 132 et ledit enroulement secondaire 130 sont configurés pour saturer ledit tore 128, sous l'action du courant crête.

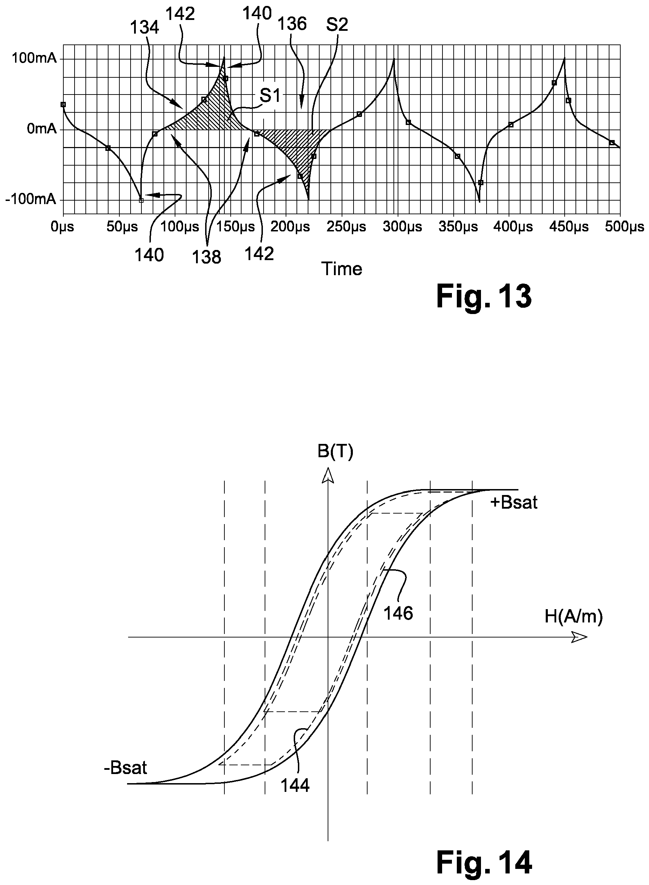

On décrit en référence à la figure 13 la forme du courant traversant l'enroulement secondaire 130 sous l'effet de la tension délivrée par un tel oscillateur 132. A cette figure, l'intensité du courant est illustrée en ordonnée et le temps est illustré en abscisse. En réponse au signal de tension carré délivré par l'oscillateur, le courant dans l'enroulement secondaire 130 présente des phases ascendantes 134 et descendantes 136 alternant les unes avec les autres. Dans une partie intermédiaire 138 de chacune desdites phases ascendantes et descendantes 134, 136 le courant généré dans l'enroulement secondaire 130 correspond à un état non saturé du tore 128. Dans ces parties intermédiaires, le courant croit ou décroît relativement lentement. Dans les parties de début 140, ou de fin 142 de chacune desdites phases ascendantes et descendantes 134, 136, le courant généré dans l'enroulement secondaire correspond par contre à un état saturé du tore magnétique 128 et le courant croit ou décroît de façon relativement rapide.

Le cycle correspondant de magnétisation et de démagnétisation du tore 128 est illustré à la figure 14 en cas de présence ou non d'un courant circulant dans l'enroulement primaire.

La courbe en trait plein est la courbe de magnétisation maximale.

La courbe 144, illustrée par des tirets, correspond au cas où il n'y a pas de courant circulant dans l'enroulement primaire. Dans ce cas, on constate que les valeurs extrêmes de l'induction correspondent à des zones de saturation de la matière. On constate également que les valeurs extrêmes sont égales en valeur absolue. Ceci se traduit sur la courbe de la figure 13 par des valeurs extrêmes Ip+, Ip- de courant circulant dans l'enroulement secondaire qui sont aussi égales en valeur absolue et de signe opposé. Ceci se traduit encore par une égalité des surfaces S1 et S2, respectivement situées entre l'axe des abscisses et la partie positive des phases ascendantes et descendantes 134, 136 et entre l'axe des abscisses et la partie négative des phases ascendantes et descendantes 134, 136, c'est-à-dire, par une valeur moyenne nulle du courant circulant dans ledit enroulement secondaire.

La courbe 146, illustrée par des tirets, correspond au cas dans lequel, on introduit un courant dans l'enroulement primaire. Par rapport à la courbe 144, la courbe 146 est décalée vers les valeurs positives d'induction comme représenté. Le niveau de saturation du matériau magnétique est plus élevé dans les valeurs positives que dans les valeurs négatives quand le courant primaire génère un champ magnétomoteur positif.

Inversement, le niveau de saturation du matériau magnétique est plus élevé dans les valeurs négatives que dans les valeurs positives quand le courant primaire génère un champ magnétomoteur négatif. Dans ce cas, par rapport à la courbe 144, la courbe 146 serait décalée vers les valeurs négatives d'induction.

Autrement dit, la présence d'un courant dans l'enroulement primaire 127 modifie l'état magnétique du tore 128, ce qui entraîne une modification du cycle de magnétisation et de démagnétisation du tore 128 et du courant au secondaire.

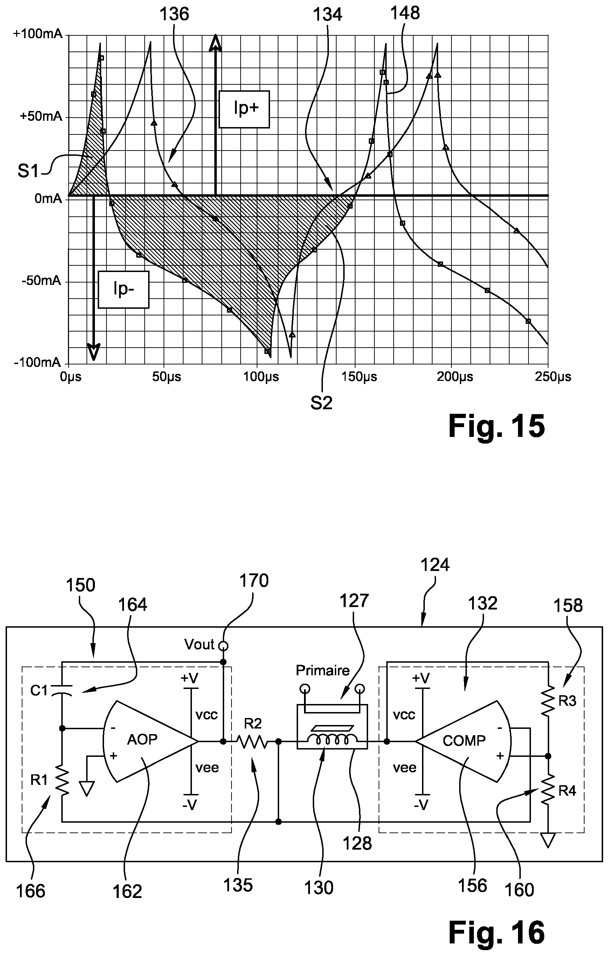

On a illustré à la figure 15, la courbe 148 donnant l'intensité du courant dans l'enroulement secondaire 130 en fonction du temps dans le cas d'un champ magnétomoteur positif. Les phases ascendantes et descendantes 134, 136 de la courbe 138 en cas d'absence de courant circulant dans l'enroulement primaire ont également été représentées pour faciliter les comparaisons.

On retrouve dans la courbe 148 la dissymétrie de la courbe 146 de magnétisation et démagnétisation. Les vitesses d'évolution du courant au secondaire sont beaucoup plus élevées dans la partie positive que dans la partie négative, car on sature mieux dans la partie positive que dans la partie négative. Ceci permet d'expliquer la différence entre les surfaces S1, S2 des parties positives et négatives. Autrement dit, la valeur moyenne du courant circulant dans l'enroulement secondaire n'est plus nulle. Cette valeur moyenne dépend du courant qui circule dans l'enroulement primaire.

Par conséquent, lorsque le courant de l'enroulement primaire 127 varie, la valeur moyenne du courant au secondaire 130 sur une période d'oscillation varie proportionnellement. Ainsi, en observant le courant au secondaire, on remonte à la valeur du courant dans l'enroulement primaire 127. On dispose de la sorte d'une solution permettant de mettre en évidence la présence et même de quantifier la valeur du courant circulant dans l'enroulement primaire 127. En outre, grâce aux moyens 126 de génération de flux magnétique, une mesure du courant dans l'enroulement primaire 127 est obtenue tout en ayant une isolation galvanique entre le circuit 4 du véhicule et le circuit mis en œuvre pour la mesure.

Il est préférable que les valeurs de courant au secondaire 130 permettent d'atteindre une saturation du tore 128. Les figures 14 et 15 illustrent l'intérêt de la saturation du tore. On constate en effet que, grâce à ce phénomène, l'amplitude de variation d'induction change de façon significative en fonction du niveau de courant passant dans l'enroulement primaire. On améliore de la sorte la précision de la mesure.

Pour garantir un bon niveau de saturation du matériau magnétique, il est nécessaire que le courant circulant dans l'enroulement secondaire soit suffisamment élevé. Par exemple, le courant maximum en valeur absolue circulant dans ledit enroulement secondaire est de l'ordre de 100 mA avec une bonne saturation du tore 128.

Par ailleurs, le courant circulant dans l'enroulement primaire 127 peut être est de type variable. Par exemple, le courant peut avoir une fréquence de 50 Hz. Pour que la fréquence de l'oscillateur permette d'obtenir des mesures de ce courant circulant dans l'enroulement primaire 127, il est nécessaire que la fréquence de cet oscillateur soit très supérieure à celle du courant circulant dans ledit enroulement primaire, notamment au moins 10 fois plus élevée, par exemple 100 fois plus élevée. Ceci permet de reconstituer le courant au primaire de façon suffisamment fidèle pour son exploitation. La fréquence de l'oscillateur 132 peut être située entre 1 et 20 kHz. En particulier, la fréquence de l'oscillateur 132 peut être de 7 kHz pour permettre la mesure d'un courant de fréquence 50Hz au primaire. Autrement dit, on cherche à reproduire la forme d'onde du courant au primaire 127 avec par exemple une erreur de 5 à 10% sur les valeurs crêtes.

Des résultats avantageux ont été obtenus dans ce sens en choisissant pour l'enroulement secondaire 130 un nombre de spires compris entre 10 et 50 spires, notamment entre 20 et 30 spires pour un enroulement primaire ayant une spire.

Cependant, l'enroulement primaire 127 pourrait présenter plus d'une spire. L'enroulement secondaire 130 a alors un nombre correspondant de spires.

Selon une première variante, illustrée en figure 18, le dispositif de mesure 124 comprend des moyens de traitement numérique 151 permettant d'obtenir la valeur du courant circulant dans ledit enroulement primaire 127 d'après le courant circulant dans l'enroulement secondaire 130. Autrement dit, on sort directement la valeur du courant au secondaire tel que présenté en figure 13 vers un microcontrôleur ou un circuit numérique. La valeur du courant au primaire est déduite par un traitement du signal.

Cependant, le dispositif selon cette première variante donne un résultat moins performant en termes de linéarité par rapport aux variantes qui suivent. En se référant à la figure 14, on comprend que de fortes valeurs de courant au primaire 127 rapprochent la courbe 146 de la valeur extrémale +Bsat si le champ magnétomoteur est positif ou de la valeur extrémale -Bsat si le champ magnétomoteur généré est négatif. Ceci implique que pour de fortes valeurs de courant au primaire, une relation linéaire entre le courant au primaire 127 et la valeur de celui au secondaire 130 n'est plus garantie. Autrement dit, lorsque le tore 128 est fortement éloigné de son état magnétique neutre, correspondant par exemple à la courbe 144 en figure 14 ou à la courbe 138 en figure 13, une mesure fiable du courant au primaire n'est plus assurée.

Dans une deuxième et une troisième variantes illustrées en figures 12, 16 et 17, pour quantifier la valeur du courant circulant dans l'enroulement primaire 127, les dispositif de mesure 124 comprennent un module intégrateur-comparateur 150 délivrant un courant de sortie, dit image du courant au primaire, qui est fonction du courant de mode commun à mesurer.

Le module 150 intègre le courant provenant de l'enroulement secondaire 130 et compare sa valeur moyenne avec une valeur nulle. Le module intégrateur-comparateur 150 délivre un courant qui est fonction de la différence entre la valeur moyenne du courant au secondaire 130 avec une valeur nulle. A cet effet, cette différence est fortement amplifiée, par exemple avec un gain supérieur à 70dB. Le module 150 est configuré pour modifier son courant de sortie tant que la différence n'est pas sensiblement nulle.

Les dispositif de mesure 124 comprennent en outre des moyens pour compenser le flux généré dans le tore 128 par le courant circulant dans ledit enroulement primaire 127, à partir du courant délivré par ledit module intégrateur-comparateur 150.

Ainsi, le tore 128 est constamment ramené à un état magnétique neutre, la valeur moyenne du courant au secondaire est constamment ramenée à une valeur nulle et le courant délivré par le module 150 correspond au courant parcourant l'enroulement primaire 127, autrement dit au courant de mode commun à mesurer. Le module 150 et les moyens de compensation de flux définissent une boucle d'asservissement contrôlant l'état magnétique du tore 128.

Ledit module intégrateur-comparateur 150 est relié audit enroulement secondaire 130. En particulier, ledit module intégrateur-comparateur 150 comprend une entrée inverseuse, reliée à ladite seconde borne de l'enroulement secondaire 130, notamment par l'intermédiaire d'une résistance 166, et une entrée non inverseuse reliée à la masse.

Selon la deuxième variante, correspondant à celle illustrée à la figure 12, lesdits moyens de compensation correspondent à un troisième enroulement 152, enroulé autour dudit tore 128. Les moyens de mesure sont configurés de façon à ce que ledit troisième enroulement 152 génère dans le tore un flux magnétique, dit flux de compensation, opposé à celui généré par ledit enroulement primaire ; le flux de compensation étant généré à partir du courant délivré par le module intégrateur-comparateur 150.

Ledit troisième enroulement 152 est relié à la sortie du module intégrateur-comparateur 150 de façon à ce que ledit troisième enroulement soit parcouru par le courant image du courant au primaire.

Par exemple, la borne du troisième enroulement 152 opposée à celle reliée au module intégrateur-comparateur 150, dite borne de sortie 153, est reliée à une résistance de sortie 154 elle-même connectée par sa borne opposée à la masse. La tension V**OUT** à la borne de sortie est ainsi égale au produit de la résistance **Rs** de ladite résistance de sortie 154 et du quotient de l'intensité du courant **Ie** circulant dans l'enroulement primaire 127 par le nombre de tours **N** dudit troisième enroulement 152. On dispose ainsi de l'intensité **Ie** du courant circulant dans l'enroulement primaire 127 par une simple mesure de la tension à ladite borne de sortie 153.

$$V\text{OUT} = Rs \times ( \text{Ie} / N )$$

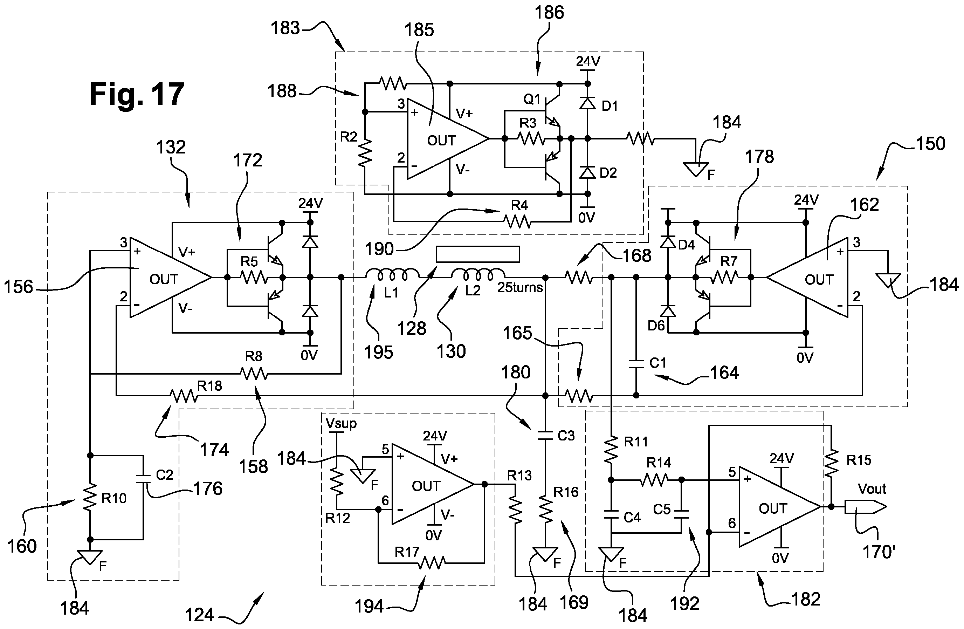

La troisième variante est illustrée en figures 16 et 17. Dans ces figures, le tore 128 est illustré de façon schématique. On remarquera par ailleurs que l'enroulement primaire n'a pas été illustré à la figure 17.

Dans cette troisième variante, lesdits moyens de compensation correspondent à l'enroulement secondaire 130. Une sortie du module intégrateur-comparateur 150 est reliée à l'enroulement secondaire 130 et lesdits dispositif de mesure 124 sont configurés pour que le module intégrateur-comparateur 150 génère un courant circulant dans l'enroulement secondaire 130 de façon à compenser le flux généré par l'enroulement primaire 127. Autrement dit, dans cette variante, le flux magnétique généré dans le tore 128 par le courant circulant dans l'enroulement primaire 127 n'est plus compensé par un flux généré par un courant parcourant une troisième bobine. Les dispositif de mesure 124 sont configurés pour que le flux de compensation soit généré directement par un courant de compensation parcourant l'enroulement secondaire 130. Dans cette variante, il n'est donc pas nécessaire d'utiliser un troisième enroulement 152.

En figures 16 et 17, on constate que l'oscillateur 132 comprend un amplificateur opérationnel 156 et un pont diviseur de tension comprenant deux résistances 158, 160. Le point milieu dudit diviseur de tension est relié à l'entrée non inverseuse dudit amplificateur opérationnel 156. La sortie de l'amplificateur opérationnel 156, la borne de l'une 158 des résistances opposée au point milieu dudit diviseur de tension et l'une des bornes du second enroulement 130 sont au même potentiel. L'autre 160 des résistances dudit pont diviseur de tension est reliée à la masse.

Le module intégrateur-comparateur 150 comprend un amplificateur opérationnel 162 et un pont RC comprenant une capacité 164 et une résistance 166. L'entrée non inverseuse dudit amplificateur opérationnel 162 est reliée à la masse. Son entrée inverseuse est reliée au point milieu du pont RC.

Dans la variante illustrée en figure 16, le dispositif de mesure 124 comprend une résistance 135, dite de paramétrage. L'une des bornes de ladite résistance de mesure est mise au même potentiel que l'entrée inverseuse de l'amplificateur opérationnel 156 de l'oscillateur 132, la borne de l'enroulement secondaire 130 opposée à celle reliée à la sortie dudit amplificateur opérationnel 156 de l'oscillateur 132, et la borne de la résistance 166 du pont RC opposée au point milieu dudit pont RC. L'autre des bornes de ladite résistance de mesure 135 est mise au même potentiel que la sortie dudit amplificateur opérationnel 162 du module intégrateur-comparateur 150, la borne de la capacité 164 du pont RC opposée au point milieu dudit pont RC, et un point de sortie 170.

Selon cette variante, ladite résistance de mesure 135 joue un double rôle.

La résistance 135 permet de paramétrer l'oscillateur 132, notamment les valeurs crête Ip+, Ip- du courant au secondaire 130.

En outre, la résistance 135 relie le second enroulement 130 à la sortie du module intégrateur-comparateur 150 pour la circulation du courant de compensation. Ladite résistance de mesure 135 sert de résistance de sortie au sens de la configuration du mode de réalisation de la figure 12. Une mesure de la tension au niveau du point de sortie 170 donnera la valeur du courant circulant dans l'enroulement primaire 127.

Cependant, la résistance 135 ne pouvant prendre qu'une seule valeur, elle doit respecter un compromis entre les spécifications de l'oscillateur 132 et celles liées à la mesure de la tension au niveau du point de sortie 170. La variante illustrée en figure 17 permet de s'affranchir de ce problème.

Selon la variante illustrée à la figure 17, Le dispositif de mesure 124 comprend une résistance 169, dite d'ajustement, placée entre une borne de l'enroulement secondaire 130, située entre ledit enroulement secondaire 130 et ledit oscillateur 132, et une masse dudit dispositif 124. La résistance d'ajustement 169 permet d'adapter les caractéristiques de l'oscillateur 132, notamment en vue d'assurer la saturation du tore 128. La capacité 180 permet d'éliminer une composante continue dans le courant délivré à la résistance d'ajustement 169. Ainsi, la résistance d'ajustement 169 ne reçoit que le courant oscillant déterminé par l'oscillateur 132.

Le dispositif de mesure 124 comprend en outre une résistance 168, dite de mesure, qui sert de résistance de sortie au sens de la configuration du mode de réalisation de la figure 12.

On sépare de la sorte les fonctions de résistance de l'oscillateur et de conducteur servant à établir le courant de compensation, sans avoir à ajouter un troisième enroulement tel que celui de la figure 12.

Il est à noter que la figure 17 présente un schéma électrique développé, contrairement à la figure 16 qui présente un schéma électrique semi-développé. Certains éléments de la variante illustrée en figure 17 peuvent être intégrés de façon similaire dans la variante de la figure 16, notamment un amplificateur de courant 172 et une résistance 174 de l'oscillateur 132, et un amplificateur de courant 178 du module intégrateur-comparateur 150, ainsi qu'un module de filtrage 182, des moyens 194 permettant d'ajuster la plage de tension du signal de sortie, un générateur 183 de masse fictive 184, et des moyens de sécurisation 193, 195, 196 du fonctionnement de l'oscillateur.

La sortie de l'amplificateur opérationnel 156 de l'oscillateur 132 est par exemple reliée à une entrée de l'amplificateur de courant 172. La sortie dudit amplificateur de courant 172, la borne de l'une 158 des résistances opposée au point milieu dudit diviseur de tension et l'une des bornes du second enroulement 130 sont au même potentiel.

L'oscillateur 132 peut comprendre la résistance 174 dont une première borne est reliée à l'entrée inverseuse de l'amplificateur opérationnel 156 dudit oscillateur 132.

La sortie de l'amplificateur opérationnel 162 du module intégrateur-comparateur 150 est par exemple reliée à une entrée de l'amplificateur de courant 178. L'une des bornes de ladite résistance de mesure 168 est mise au même potentiel que la sortie dudit amplificateur de courant 178, la borne de la capacité 164 du pont RC du module intégrateur-comparateur 150 opposée au point milieu dudit pont RC, et le point de sortie 170.

L'autre borne de la résistance de mesure 168 est mise au même potentiel qu'une seconde borne de la résistance 174, la borne de l'enroulement secondaire 130 opposée à celle reliée à la sortie dudit amplificateur de courant 152 de l'oscillateur 132, et la borne de la résistance 166 du pont RC du module intégrateur-comparateur 150 opposée au point milieu dudit pont RC. Cette borne est également au même potentiel que l'une des bornes de la résistance d'ajustement 169, ici par l'intermédiaire d'une capacité 180.

Grâce aux différents circuits décrits plus haut, la présence et même le niveau d'un courant au primaire 127 est ainsi déterminable. Ainsi la mesure du courant de mode commun peut être obtenue.

A ce sujet, le dispositif de mesure 124 peut en outre comprendre un module de filtrage 182, reliant le point de sortie 170 à un point de mesure de tension 170'. Ledit module de filtrage 182 est configuré pour éliminer du signal les ondulations provenant de l'oscillateur 132. Au niveau des bornes d'une capacité 192 dudit module de filtrage 182, on dispose ainsi d'un signal, notamment une tension, présentant un profil sensiblement identique à celui du courant circulant dans l'enroulement primaire 127, c'est-à-dire dans la ligne électrique 5 qu'elle soit composée d'un ou plusieurs éléments conducteurs.

Pour faciliter le traitement dudit signal, les moyens de mesure pourront en outre comprendre des moyens 194 permettant d'ajuster la plage de tension du signal disponible au niveau du point de sortie 170' du dispositif. Par exemple, les moyens d'ajustement 194 sont configurés pour que la tension de sortie soit une plage de tension positive déterminée à partir d'une alimentation Vsup. Ceci facilite un traitement ultérieur du signal de sortie, par exemple par une unité de contrôle. Par exemple, un courant au primaire de -100 mA correspond à une tension de sortie Vout de 0V ; un courant au primaire de 0 mA correspond à une tension de sortie Vout de valeur $\dfrac{V \sup}{2}$ ; et un courant au primaire de 100 mA correspond à une tension de sortie Vout de valeur Vsup. Dans le cas où le signal de sortie Vout est ensuite traité par une unité de contrôle, l'alimentation Vsup peut correspondre à l'alimentation de cette unité de contrôle.

Différents moyens pourront en outre être employés pour fiabiliser la mesure, notamment en assurant l'obtention d'un courant qui soit le plus symétrique possible dans l'enroulement secondaire 130 en cas d'absence de courant circulant dans l'enroulement primaire 127. On entend par là un courant pour lequel les surfaces S1 et S2 évoquées plus haut soient les plus proches possibles, avec un minimum d'erreur, en particulier d'erreur de type offset.

A cet effet, le dispositif de mesure 124 peut être relié une masse fictive 184. Plus précisément, la résistance 160 du pont diviseur de tension dudit oscillateur 132, la résistance d'ajustement 169 et/ou l'entrée inverseuse de l'amplificateur opérationnel 162 du module intégrateur-comparateur 150 pourront être reliées à ladite masse fictive 184. Le générateur 183 de masse fictive a pour but de générer deux alimentations symétriques de valeurs aussi identiques que possible, pour limiter au maximum les dissymétries d'amplitude de l'oscillateur qui influent sur l'offset de la mesure.

Ledit générateur de masse fictive 184 comprend un amplificateur opérationnel 185 dont la sortie est reliée à ladite masse fictive par un amplificateur de courant 186. Ledit générateur de masse fictive 184 comprend en outre un pont diviseur de tension 188 dont le point milieu est relié à l'entrée non inverseuse de l'amplificateur opérationnel 185. Les extrémités du pont diviseur de tension ainsi que l'amplificateur de courant sont connectés à une source d'alimentation en tension, notamment entre 0 et 24V. Ledit générateur de masse fictive comprend encore une résistance 190 placée entre la masse fictive et l'entrée inverseuse dudit amplificateur opérationnel 185.

Une autre solution contribuant à assurer l'obtention d'un courant dans l'enroulement secondaire 130 qui soit le plus symétrique possible en cas d'absence de courant circulant dans l'enroulement primaire 127 consiste dans l'utilisation des amplificateurs de courant 172, 178, 186 en sortie des amplificateurs opérationnels 156, 162, 185 des moyens de mesure et/ou du générateur de masse fictive. On pourra de la sorte choisir des amplificateurs opérationnels précis tout en restant de coût limité car ayant moins de courant à délivrer. Dans le même esprit, lesdits amplificateurs de courant 172, 178, 186 comprennent, par exemple, des transistors bipolaires.

Toujours dans le but d'obtenir un courant dans l'enroulement secondaire 130 qui soit le plus symétrique possible en cas d'absence de courant circulant dans l'enroulement primaire, le ou les amplificateurs opérationnels 156, 162, 185 des moyens de mesure et/ou du générateur de masse fictive pourront être choisis de façon à assurer des temps de transition entre les valeurs +Vmax et -Vmax de leur tension de sortie inférieurs à 50 ns. C'est en particulier le cas pour l'amplificateur opérationnel 156 de l'oscillateur 132. On évite de la sorte d'apporter une dissymétrie temporelle aux signaux générés illustrés en figure 11.

Selon un exemple compatible avec toutes les variantes précédenets, le dispositif de mesure 124 comprend en outre des moyens 193, 195, 196 pour sécuriser le fonctionnement de l'oscillateur 132.

Lorsque le courant au primaire 127 est très élevé, le tore 128 sature fortement en permanence, ce qui entraîne une augmentation de la fréquence de l'oscillateur 132. Un courant très élevé au primaire est par exemple de l'ordre 1A, voir 10A. La fréquence de l'oscillateur 132 peut alors être si élevée que le module intégrateur-comparateur 150 est susceptible de ne pas pouvoir traiter le signal délivré par l'oscillateur. Une forte saturation du tore 128 peut même entraîner l'arrêt des oscillations. Ceci entraîne une instabilité du dispositif de détection 100. La tension de sortie Vout ne correspond plus alors avec certitude au courant au primaire. Il y a un risque que la tension de sortie donne une valeur minorée du courant au primaire 127.

Les moyens de sécurisation 193, 195, 196 contrôlent la fréquence de l'oscillateur 132 de façon à s'assurer que l'oscillateur fonctionne correctement.

Par exemple, les moyens de sécurisation consistent en une inductance 196 en série entre l'oscillateur 132 et l'enroulement secondaire 130. L'inductance 196 n'est pas enroulée sur le tore 128 et est donc sensiblement indépendant de l'état magnétique du tore. L'inductance 196 assure que l'oscillateur 132 oscille même quand le courant au primaire est très élevé. L'inductance 196 se substitue alors à l'enroulement secondaire 130 qui est trop saturé, et détermine la fréquence de l'oscillateur 132. Par exemple, l'inductance 196 assure une fréquence d'oscillation Fmax qui est compatible avec le module intégrateur-comparateur 150. La tension de sortie Vout se stabilise à une tension correspondante qui indique que le courant au primaire est très élevé ou hors de la gamme de mesure du dispositif.

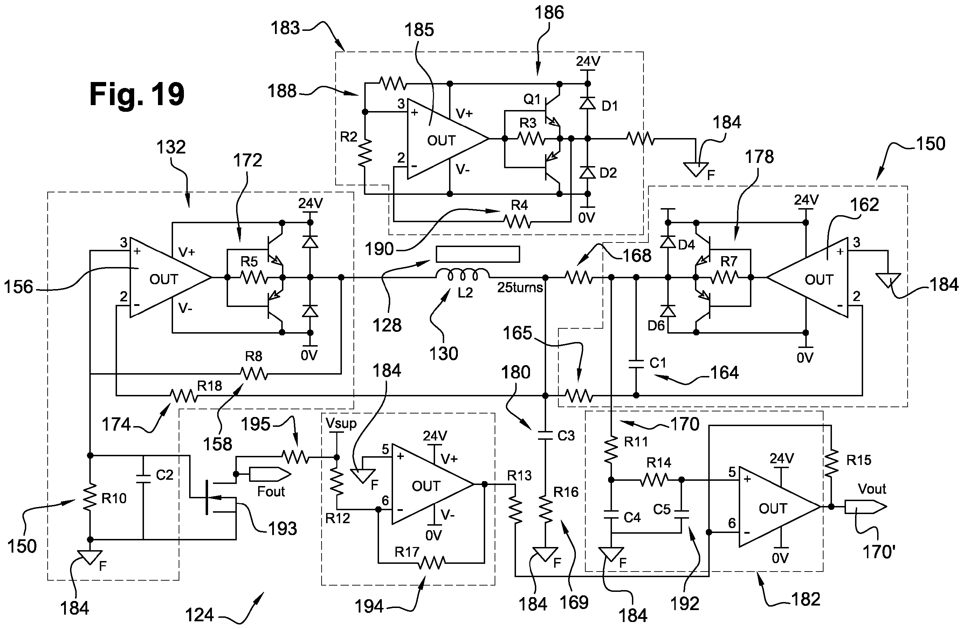

Par exemple, les moyens de sécurisation consistent en des moyens de mesure 193, 195 de la fréquence de l'oscillateur 132 comme illustré en figure 19. Ainsi, on peut vérifier que l'oscillateur 132 fonctionne dans la gamme de fréquence prévue par conception. Par exemple, on s'assure que la fréquence reste dans une plage de plus ou moins 25%. La figure 19 correspond à la variante de la figure 15 dans laquelle l'inductance 196 est remplacée par le transistor 193 et la résistance 195.

Les moyens de mesure peuvent comprendre un transistor 193 dont la tension de grille correspond à la tension aux bornes de la résistance 160 connectée entre la masse et l'entrée non inverseuse de l'amplificateur opérationnel 156 de l'oscillateur 132. Le drain du transistor 193 est connecté par une résistance 195 à une alimentation. Cette alimentation est par exemple la même alimentation Vsup utilisée par le dispositif 194 d'ajustement de plage de tension.

Le transistor 193 peut être un transistor MOSFET. La tension drain-source du transistor 193 correspond à la fréquence Fout de l'oscillateur 132.

La fréquence maximale d'oscillation dépend entre autres du matériau magnétique du tore 128, du nombre de spires de l'enroulement secondaire 130 et du courant au primaire.

Bien entendu, l'invention ne se limite pas aux exemples décrits.

En particulier, l'invention s'applique à un moteur ayant plusieurs phases. L'invention peut s'appliquer à d'autres circuits 4 qu'à ceux embarqués sur un véhicule.

Le dispositif de mesure 124 mesure un courant circulant dans un enroulement primaire 127. Ce courant est en particulier un courant résultant. Dans ce cas, le tore 128 est traversé par plusieurs éléments conducteurs formant l'enroulement primaire 127 qui produit ce courant résultant.

En particulier, le circuit électrique 4 est un onduleur/chargeur à pont en H, par exemple tel que le dispositif divulgué dans les demandes de brevet Français FR2938711 ou FR2944391 de la demanderesse, dont les contenus sont incorporés dans la présente demande.

L'expression « comportant un » doit être comprise comme signifiant « comportant au moins un », sauf lorsque le contraire est spécifié.

**Revendications**

**1.** Procédé de réduction du courant de mode commun (i) circulant entre la masse interne (13) d'un circuit électrique (4), notamment d'un circuit électrique (4) d'un véhicule automobile, et la terre, lorsque de l'énergie électrique est échangée entre une unité de stockage d'énergie électrique du circuit électrique (4) et une source d'énergie électrique (2) externe audit circuit (4), procédé dans lequel :

• on applique en un point d'injection (26) du circuit (4) à l'aide d'un composant électronique (21) une grandeur électrique (Vs, Is) au moins fonction dudit courant de mode commun, ladite grandeur électrique (Vs, Is) étant appliquée de manière à réduire le courant de mode commun (i) et ledit point d'injection (26) étant relié via des impédances (28) à chacun des conducteurs (17, 18) d'une ligne électrique (5) dudit circuit (4) par l'intermédiaire de laquelle est échangée ladite énergie électrique ;

• on mesure distinctement deux valeurs du courant de mode commun (i), respectivement mesurés, d'une part, sur la ligne électrique (5) entre la source d'énergie électrique (2) et la ou les connexions de la ou des impédances (28), et, d'autre part, sur la ligne électrique (5) entre la ou les connexions de la ou des impédances (28) et l'unité de stockage d'énergie électrique,

lesdits courants de mode commun (i) étant respectivement mesurés [voir par exemple page 15, lignes 11-20] à l'aide d'un dispositif de mesure (124) comprenant :

- un tore magnétique (128) configuré pour être traversé par une ligne électrique (5) par l'intermédiaire de laquelle est échangée ladite énergie électrique, ladite ligne électrique (5) formant un enroulement primaire (127) ;
- un enroulement secondaire (130), enroulé autour dudit tore (128), pour générer un flux magnétique à partir d'un courant de référence ;
- un oscillateur (132) pour générer le courant de référence à travers l'enroulement secondaire (130), le courant de référence étant configuré pour faire saturer ledit tore (128) ;

le courant de mode commun correspondant à la valeur du courant de la ligne électrique (5) obtenue à partir de la valeur moyenne du courant dans l'enroulement secondaire (130) sur une période d'oscillation parcourant un cycle complet de magnétisation et de démagnétisation du tore (128)

et dans lequel ladite grandeur électrique (Vs, Is) est appliquée par le composant électronique (21) en fonction :

- dudit courant de mode commun (i) mesuré sur la ligne électrique (5) entre la source d'énergie électrique (2) et la ou les connexions de la ou des impédances (28),
- dudit courant de mode commun (i) mesuré sur la ligne électrique (5) entre la ou les connexions de la ou des impédances (28) et l'unité de stockage d'énergie électrique, et
- du courant (Is) circulant entre ledit point d'injection (26) et la terre.

2. Procédé selon la revendication 1, dans lequel la mesure du courant de la ligne électrique (5) comprend l'utilisation :

- d'un module intégrateur-comparateur (150) configuré pour délivrer un courant, dit image du courant au primaire, qui est fonction du courant traversant la ligne électrique (5), et
- des moyens (130, 152) pour compenser le flux généré par le courant traversant la ligne électrique (5) à partir du courant délivré par ledit module (150).

3. Procédé selon la revendication 2, dans lequel la compensation de flux comprend l'utilisation d'un troisième enroulement (152) enroulé autour dudit tore (128), une sortie dudit module intégrateur-comparateur (150) étant reliée audit troisième enroulement (152) de façon à ce que ledit troisième enroulement (152) soit parcouru par ledit courant image du courant au primaire.

4. Procédé selon la revendication 2, dans lequel la compensation de flux comprend l'utilisation dudit enroulement secondaire (130), une sortie dudit module intégrateur-comparateur (150) étant reliée audit enroulement secondaire (130) de façon à ce que ledit enroulement secondaire (130) soit parcouru par ledit courant image du courant au primaire.

5. Procédé selon la revendication 4, dans lequel la mesure (124) du courant de la ligne électrique (5) comprend l'utilisation d'une résistance (135), dite de paramétrage, ayant une première borne reliée à l'enroulement secondaire (130) et à l'oscillateur (132), et une seconde borne reliée à une borne de sortie (170) du dispositif (100) et au module intégrateur-comparateur (150) de façon à ajuster les caractéristiques de sortie du dispositif de mesure (124) et les caractéristiques de l'oscillateur (132).

6. Procédé selon la revendication 4, dans lequel la mesure (124) du courant de la ligne électrique (5) comprend l'utilisation d'une résistance (169), dite d'ajustement, ayant une première borne reliée à l'enroulement secondaire (130) et à l'oscillateur (132) et une seconde borne reliée à une masse dudit dispositif (100) de façon à ajuster les caractéristiques de l'oscillateur (132).

7. Procédé selon l'une des revendications précédentes, dans lequel le composant électronique (21) est configuré de manière à asservir la valeur du courant de mode commun (i) qu'il reçoit en entrée à une valeur de consigne prédéfinie, notamment zéro.

8. Procédé selon l'une quelconque des revendications précédentes, dans lequel ladite grandeur électrique est un potentiel électrique appliqué au point d'injection (26) et dont résulte une tension (Vs) appliquée entre ledit point d'injection (26) et la terre.

9. Procédé selon la revendication précédente, dans lequel, le composant électronique (21) étant interposé entre la masse interne (13) du circuit (4) et la terre, on applique la grandeur électrique, dite tension additionnelle, entre la masse interne (13) du circuit (4) et la terre à l'aide dudit composant électronique (21), cette tension additionnelle s'opposant à une tension appliquée par le réseau électrique (2) entre la masse interne (13) et la terre, de manière à réduire le courant de mode commun (i).

10. Procédé selon l'une des revendications précédentes, dans lequel la valeur du courant de la ligne électrique (5) est mesurée à l'aide du dispositif de mesure (124) positionné sur la ligne électrique (5) entre la source d'énergie électrique (2) du réseau et la ou les impédances (28) reliant la ligne électrique (5) audit point d'injection (26).

11. Procédé selon l'une des revendications précédentes, comprenant l'utilisation d'un composant électronique (21) comportant :

   - un premier sous-composant (60) recevant en entrée le courant de mode commun (i) mesuré sur la ligne électrique (5), et
   - un deuxième sous-composant (61) recevant en entrée le courant (Is) circulant entre ledit point d'injection (26) et la terre,
   les sorties de chaque sous-composant (60, 61) étant additionnées pour générer la grandeur (Vs, Is) appliquée par le composant électronique (21).

12. Procédé selon la revendication précédente, dans lequel ledit composant électronique (21) comportant un troisième sous-composant (62), les premier, deuxième et troisième sous-composants (60, 61, 62) étant configurés de telle sorte que :

   - le premier sous-composant (60) reçoit en entrée le courant de mode commun (i) mesuré sur la ligne électrique (5) entre la source d'énergie électrique (2) et la ou les connexions de la ou des impédances (28),
   - le deuxième sous-composant (61) se comporte comme un gain, et
   - le troisième sous-composant (62) reçoit en entrée le courant de mode commun (i) mesuré sur la ligne électrique (5) entre la ou les connexions de la ou des impédances (28) et l'unité de stockage d'énergie électrique et forme un gain,
   la sortie du troisième sous-composant (62) étant comparée au courant circulant entre ledit point d'injection et la terre et le résultat de cette comparaison formant l'entrée du deuxième sous-composant (61), et
   la sortie du premier sous-composant (60) et la sortie du deuxième sous-composant (61) étant additionnées pour générer la grandeur électrique (Vs, Is) appliquée par le composant électronique (21).

13. Circuit électronique (21), comportant :

   - une ligne électrique (5) apte à être connectée à un réseau électrique de manière à permettre un échange d'énergie électrique entre une source d'énergie électrique (2) dudit réseau et ledit circuit (4), et
   - un composant électronique (21) destiné à être relié d'une part à la ligne électrique (5), et apte à être relié d'autre part à la terre, le composant (21) étant configuré pour appliquer en un point (26) du circuit (21) une grandeur électrique (Vs, Is) permettant de réduire le courant de mode commun (i) lorsque de l'énergie électrique est échangée entre le circuit électrique (21) et la source d'énergie électrique (2), ledit point d'injection (26) étant relié via des impédances (28) à chacun des conducteurs (17, 18) d'une ligne électrique (5) dudit circuit (4) par l'intermédiaire de laquelle est échangée ladite énergie électrique ; et

- un dispositif de mesure (124) comprenant :

   - un tore magnétique (128) configuré pour être traversé par la ligne électrique (5) par l'intermédiaire de laquelle est échangée ladite énergie électrique, ladite ligne électrique (5) formant un enroulement primaire (127) ;
   - un enroulement secondaire (130), enroulé autour dudit tore (128), pour générer un flux magnétique à partir d'un courant de référence ;
   - un oscillateur (132) pour générer le courant de référence à travers l'enroulement secondaire (130), le courant de référence étant configuré pour faire saturer ledit tore (128) ;

pour mesurer distinctement deux valeurs du courant de mode commun (i), respectivement mesurés, d'une part, sur la ligne électrique (5) entre la source d'énergie électrique (2) et la ou les connexions de la ou des impédances (28), et, d'autre part, sur la ligne électrique (5) entre la ou les connexions de la ou des impédances (28) et l'unité de stockage d'énergie électrique,

le courant de mode commun correspondant à la valeur du courant de la ligne électrique (5) obtenue à partir de la valeur moyenne du courant au secondaire (130) sur une période d'oscillation parcourant un cycle complet de magnétisation et de démagnétisation du tore (128),

et dans lequel composant électronique (21) est configuré de sorte que ladite grandeur électrique (Vs, Is) est appliquée par le composant électronique (21) en fonction :

   - dudit courant de mode commun (i) mesuré sur la ligne électrique (5) entre la source d'énergie électrique (2) et la ou les connexions de la ou des impédances (28),
   - dudit courant de mode commun (i) mesuré sur la ligne électrique (5) entre la ou les connexions de la ou des impédances (28) et l'unité de stockage d'énergie électrique, et
   - du courant (Is) circulant entre ledit point d'injection (26) et la terre.

Fig. 1

Fig. 2

## Fig. 3

## Fig. 4

Fig. 5

Fig. 6

Fig. 8

**Fig. 7**

**Fig. 9**

**Fig. 10**

**Fig. 11**

132

130

124

152 150

127

153

133

126 128 154

**Fig. 12**

132

130

124

127

151

128

126

133

**Fig. 18**

**Fig. 13**

**Fig. 14**

**Fig. 15**

**Fig. 16**

Fig. 17

Fig. 19

Europäisches
Patentamt

European
Patent Office

Office européen
des brevets

**RAPPORT DE RECHERCHE EUROPEENNE**

Numéro de la demande

EP 20 20 5933

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 2 571 149 A1 (VALEO SYS CONTROLE MOTEUR SAS [FR]) 20 mars 2013 (2013-03-20)<br>* alinéa [0001] - alinéa [0005] *<br>* alinéa [0051] - alinéa [0063] *<br>* figures 1-5 *<br>& FR 2 980 318 A1 (VALEO SYS CONTROLE MOTEUR SAS [FR]) 22 mars 2013 (2013-03-22)<br>* le document en entier *<br>----- | 1-13 | INV.<br>H02M1/12<br>H02J7/00<br>H02J7/02<br>B60L50/51 |
| A | FR 2 987 515 A1 (VALEO SYS CONTROLE MOTEUR SAS [FR]) 30 août 2013 (2013-08-30)<br>* page 1, ligne 4 - page 6, ligne 17 *<br>* page 10, ligne 14 - page 19, ligne 8 *<br>* page 24, ligne 15 - ligne 26 *<br>* figures 1-3,10,14,15 *<br>----- | 1-13 | |
| A | WENJIE CHEN ET AL: "An experimental study and comparison of common mode and differential mode noise compensation characteristic for active EMI filter", POWER ELECTRONICS SPECIALISTS CONFERENCE, 2008. PESC 2008. IEEE, IEEE, PISCATAWAY, NJ, USA,<br>15 juin 2008 (2008-06-15), pages 4399-4404, XP031300645,<br>ISBN: 978-1-4244-1667-7<br>* figure 1(a) *<br>----- | 1-13 | DOMAINES TECHNIQUES RECHERCHES (IPC)<br><br>H02M<br>B60L<br>H02J |
| A | MING LI ET AL: "Current feedback based hybrid common-mode EMI filter for grid-tied inverter application", ENERGY CONVERSION CONGRESS AND EXPOSITION (ECCE), 2012 IEEE, IEEE,<br>15 septembre 2012 (2012-09-15), pages 1394-1398, XP032467464,<br>DOI: 10.1109/ECCE.2012.6342652<br>ISBN: 978-1-4673-0802-1<br>* figures 1,2,6,7 *<br>----- | 1-13 | |

Le présent rapport a été établi pour toutes les revendications

| Lieu de la recherche | Date d'achèvement de la recherche | Examinateur |
|---|---|---|
| La Haye | 17 février 2021 | Lochhead, Steven |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 20 20 5933

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-02-2021

| Document brevet cité au rapport de recherche | Date de publication | Membre(s) de la famille de brevet(s) | Date de publication |
|---|---|---|---|
| EP 2571149 A1 | 20-03-2013 | EP 2571149 A1<br>FR 2980318 A1<br>JP 6126811 B2<br>JP 2013070601 A<br>US 2013070501 A1 | 20-03-2013<br>22-03-2013<br>10-05-2017<br>18-04-2013<br>21-03-2013 |
| FR 2987515 A1 | 30-08-2013 | CN 104221237 A<br>EP 2820733 A1<br>FR 2987515 A1<br>JP 6234385 B2<br>JP 2015515844 A<br>KR 20140129277 A<br>US 2015022153 A1<br>WO 2013128128 A1 | 17-12-2014<br>07-01-2015<br>30-08-2013<br>22-11-2017<br>28-05-2015<br>06-11-2014<br>22-01-2015<br>06-09-2013 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040004514 A
- FR 2980318
- EP 2571149 A
- WO 2010057892 A
- FR 2938711
- FR 2944391